# EUROPÄISCHE PATENTANMELDUNG

(11) **EP 4 005 858 A1**
(43) Veröffentlichungstag der Anmeldung: **01.06.2022**
(21) Anmeldenummer: 20210656.3
(22) Anmeldetag: 30.11.2020
(51) Int. Cl.: B60L 53/62, B60L 55/00, B60L 53/63, B60L 53/67, B60L 58/13

(54) **VERFAHREN ZUM STEUERN EINER AUSTAUSCHLEISTUNG ZWISCHEN EINER LADEINFRASTRUKTUR UND EINEM ELEKTRISCHEN VERSORGUNGSNETZ**

(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Steuern einer Austauschleistung zwischen einer Ladeinfrastruktur und einem elektrischen Versorgungsnetz, wobei mehrere Leistungseinheiten zum Abgeben oder Aufnehmen elektrischer Leistung an die Ladeinfrastruktur anschließbar sind, um elektrische Leistung zwischen den Leistungseinheiten und dem elektrischen Versorgungsnetz über die Ladeinfrastruktur auszutauschen, und mehrere der Leistungseinheiten jeweils als Elektrofahrzeug (351-355) ausgebildet sind, sodass mehrere Elektrofahrzeuge jeweils an die Ladeinfrastruktur anschließbar sind, um elektrische Leistung zwischen den Elektrofahrzeugen und dem elektrischen Versorgungsnetz über die Ladeinfrastruktur auszutauschen und die Elektrofahrzeuge dadurch zu laden oder zu entladen, jede Leistungseinheit einen veränderlichen Ladezustand aufweist, der jeweils als Einzelladezustand berücksichtigt werden kann, wenn die Leistungseinheit an die Ladeinfrastruktur angeschlossen ist, aus den Einzelladezuständen der Leistungseinheiten, ein Gesamtladezustand bestimmbar ist, für den Gesamtladezustand ein Flexibilitätsbereich für einen Steuerzeitraum vorgebbar ist, der in Abhängigkeit von der Zeit einen Bereich aufspannt, in dem der Gesamtladezustand auftreten darf, wobei der Flexibilitätsbereich durch einen zeitlichen Verlauf einer Obergrenze des Gesamtladezustands und einen zeitlichen Verlauf einer Untergrenze des Gesamtladezustands für den Steuerzeitraum aufgespannt wird, und der Flexibilitätsbereich Bereichspunkte aufweist, die jeweils durch einen Wert des Gesamtladezustands und einen Zeitpunkt in dem Steuerzeitraum definierbar sind, einem Bereichspunkt jeweils ein Gesamtleistungsintervall zugeordnet wird, das zu dem Zeitpunkt und zu der Gesamtleistung des Bereichspunktes einen einzuhaltenden Bereich für eine zwischen der Ladeinfrastruktur und dem elektrischen Versorgungsnetz auszutauschende Gesamtaustauschleistung vorgibt, und die Gesamtleistungsintervalle aller Bereichspunkte einen für die Gesamtaustauschleistung einzuhaltenden Gesamtleistungsraum über den Flexibilitätsbereich aufspannen wobei das Gesamtleistungsintervall eines Bereichspunktes von den Einzelladezuständen der Leistungseinheiten abhängt, die dem Gesamtladezustand des Bereichspunktes zugrunde liegen.

## Beschreibung

Die vorliegende Erfindung betrifft ein Verfahren zum Steuern einer Austauschleistung zwischen einer Ladeinfrastruktur und einem elektrischen Versorgungsnetz. Die Erfindung betrifft auch eine Ladeinfrastruktur. Besonders betrifft die Erfindung auch einen Fuhrpark mit einer solchen Ladeinfrastruktur.

Fuhrparks mit mehreren Elektrofahrzeugen sind bekannt. Solche Fuhrparks können gewerblich genutzt werden, wobei die Elektrofahrzeuge häufig zu einer bestimmten Tageszeit, zumindest überwiegend, genutzt werden, zum Beispiel tagsüber. Nach getaner Tätigkeit, also beispielsweise abends, kehren diese Elektrofahrzeuge zu ihrer Ladestation zurück. Insbesondere kehrt jedes Elektrofahrzeug zu einem Ladeterminal zurück, um geladen zu werden. Im genannten Beispiel würde dann also das Laden nachts erfolgen. Es kommen aber auch andere Zeiträume bzw. Zyklen in Betracht, z.B. über eine Woche.

All diese Ladeterminals zusammen sind dann Teil einer Ladeinfrastruktur. Diese Ladeinfrastruktur ist zudem an ein elektrisches Versorgungsnetz angeschlossen, um darüber die elektrische Leistung zum Laden der Elektrofahrzeuge zu beziehen. Grundsätzlich kommt aber auch in Betracht, dass die Elektrofahrzeuge vorübergehend Leistung in das elektrische Versorgungsnetz überdie Ladeinfrastruktur abgeben, um zum Beispiel zu Zeiträumen großen Leistungsbedarfs als Leistungspuffer zu dienen.

Solche Fuhrparks können dadurch, dass sie viele Elektrofahrzeuge aufweisen, eine signifikante Leistungsmenge aus dem elektrischen Versorgungsnetz beziehen bzw. temporär einspeisen. Außerdem müssen solche Elektrofahrzeuge von gewerblich genutzten Fuhrparks üblicherweise jeden Tag geladen werden, obwohl es auch andere Zyklen gibt, sodass ein großer Bedarf an elektrischer Leistung besteht, der mit entsprechend hohen Beschaffungskosten verbunden sein kann.

Es könnte nun sinnvoll sein, solche Fuhrparks entsprechend gezielt zu steuern, um die Leistungsaufnahme aus dem elektrischen Versorgungsnetz zu geeigneten Zeiträumen durchzuführen und gegebenenfalls zu anderen Zeiträumen elektrische Leistung zur Netzstützung bereitzustellen.

Obwohl somit ein Fuhrpark grundsätzlich koordiniert gesteuert werden könnte, ist dennoch zu beachten, dass diverse Elektrofahrzeuge und damit diverse Elektrospeicher vorhanden sind und koordiniert werden müssen. Besonders können unterschiedliche Eigenschaften oder Zustände der Elektrospeicher zu unterschiedlichen Leistungsbegrenzungen für den Fuhrpark insgesamt führen. Somit kann nicht beliebig elektrische Leistung aus dem elektrischen Versorgungsnetz bezogen oder eingespeist werden, sondern es sind entsprechende Besonderheiten zu berücksichtigen. Diese Besonderheiten sind aber aus Sicht des elektrischen Versorgungsnetzes nicht ohne Weiteres bekannt und trotzdem müssen sie beachtet werden.

Aus Sicht des elektrischen Versorgungsnetzes, insbesondere eines Stromvermarkters, wäre aber die Planung eines Leistungsaustausches sinnvoll. Besonders ist es wünschenswert, wenigstens einen Tag im Voraus eine verlässliche Planung vorgeben zu können, in welchen Zeiten wie viel Leistung für einen solchen Fuhrpark aus Elektrofahrzeugen bereitzustellen ist und wann mit einer Stützleistung gerechnet werden kann, die ein solcher Fuhrpark bereitstellt.

Der vorliegenden Erfindung liegt somit die Aufgabe zugrunde, zumindest eines der oben genannten Probleme zu adressieren. Insbesondere soll eine Lösung vorgeschlagen werden, bei der ein Leistungsaustausch zwischen einer Ladeinfrastruktur und einem elektrischen Versorgungsnetz möglichst genau und möglichst verlässlich geplant werden kann. Zumindest soll zu bisher bekannten Lösungen eine Alternative vorgeschlagen werden.

Erfindungsgemäß wird ein Verfahren gemäß Anspruch 1 vorgeschlagen. Dieses betrifft somit das Steuern einer Austauschleistung zwischen einer Ladeinfrastruktur und einem elektrischen Versorgungsnetz. Mit der Austauschleistung sollen Elektrofahrzeuge an der Ladeinfrastruktur geladen werden, temporär kann aber auch Leistung von diesen Elektrofahrzeugen, oder anderen Speichern der Ladeinfrastruktur, in das elektrische Versorgungsnetz eingespeist werden. Insoweit wird von einer Ladeinfrastruktur für Elektrofahrzeuge ausgegangen. Als Fahrzeuge kommen neben Bussen, LKWs und PKWs aber auch andere Fahrzeuge, z.B. Fähren, in Betracht. Die Ladeinfrastruktur mit den Elektrofahrzeugen kann als Fuhrpark bezeichnet werden.

Es sind mehrere Leistungseinheiten zum Abgeben oder Aufnehmen elektrischer Leistung an die Ladeinfrastruktur anschließbar, um elektrische Leistung zwischen den Leistungseinheiten und dem elektrischen Versorgungsnetz über die Ladeinfrastruktur auszutauschen. Mehrere der Leistungseinheiten sind jeweils als Elektrofahrzeuge ausgebildet, sodass mehrere Elektrofahrzeuge jeweils an die Ladeinfrastruktur anschließbar sind, um elektrische Leistung zwischen den Elektrofahrzeugen und dem elektrischen Versorgungsnetz über die Ladeinfrastruktur auszutauschen und die Elektrofahrzeuge dadurch zu laden, oder zu entladen. Die Ladeinfrastruktur ist im Wesentlichen zum Laden von Elektrofahrzeugen vorgesehen und jedes Elektrofahrzeug bildet entsprechend eine anschließbare Leistungseinheit. Es kommt aber auch in Betracht, dass zusätzlich ein Elektrospeicher an die Ladeinfrastruktur angeschlossen ist, der nicht Teil eines Elektrofahrzeugs ist. Ein solcher kann zum zusätzlichen Stützen vorgesehen sein, er kann aber auch einen Reservespeicher für Elektrofahrzeuge betreffen.

Jede Leistungseinheit weist somit einen veränderlichen Ladezustand auf, der jeweils als Einzelladezustand berücksichtigt werden kann, wenn die Leistungseinheit an die Ladeinfrastruktur angeschlossen ist. Jede Leistungseinheit hat natürlich unabhängig davon, ob sie an die Ladeinfrastruktur angeschlossen ist oder nicht, einen Ladezustand. Hier beschreibt aber der Begriff des Einzelladezustands nur jeweils einen Ladezustand einer Leistungseinheit, die an die Ladeinfrastruktur angeschlossen ist.

Aus den Einzelladezuständen der Leistungseinheiten ist ein Gesamtladezustand bestimmbar und dieser hängt somit nur von den Ladezuständen der jeweils mit der Ladeinfrastruktur verbundenen Leistungseinheiten ab. Die Einzelladezustände betreffen somit nur solche zu berücksichtigenden Ladezustände.

Außerdem ist vorgesehen, dass für den Gesamtladezustand ein Flexibilitätsbereich für einen Steuerzeitraum vorgebbar ist. Dieser Flexibilitätsbereich spannt in Abhängigkeit von der Zeit einen Bereich auf, in dem der Gesamtladezustand auftreten darf. Anschaulich gesprochen bildet dieser Flexibilitätsbereich also eine Fläche in einem Zeit-Gesamtladezustands-Diagramm.

Dieser Flexibilitätsbereich ist durch einen zeitlichen Verlauf einer Obergrenze des Gesamtladezustands und einen zeitlichen Verlauf einer Untergrenze des Gesamtladezustands für den Steuerzeitraum aufgespannt. Mit anderen Worten wird die Fläche des genannten anschaulichen Beispiels durch diese Obergrenze und diese Untergrenze vorgegeben.

Der Flexibilitätsbereich weist Bereichspunkte auf, die jeweils durch einen Wert des Gesamtladezustands und einen Zeitpunkt in dem Steuerzeitraum definierbar sind. Mit anderen Worten ist jeder Punkt in der Fläche des genannten anschaulichen Beispiels ein Bereichspunkt. Alle Punkte zwischen Obergrenze und Untergrenze können Bereichspunkte sein, einschließlich dieser Grenzen. Theoretisch können unendlich viele Bereichspunkte vorgesehen sein, für praktische Überlegungen wird es ausreichend sein, eine endliche Anzahl von Bereichspunkten zu betrachten.

In dem Steuerzeitraum, der in dem anschaulich genannten Diagramm die Zeitachse bilden kann, sollten die meisten Leistungseinheiten an die Ladeinfrastruktur angeschlossen sein, um geladen zu werden. Für das Beispiel, dass die Elektrofahrzeuge tagsüber unterwegs sind und abends zurückkehren, um nachts aufgeladen zu werden, ist dieser entsprechende Zeitraum in der Nacht zum Laden der Fahrzeuge der Steuerzeitraum.

Es wird weiter vorgeschlagen, dass einem Bereichspunkt jeweils ein Gesamtleistungsintervall zugeordnet wird. Dieses Gesamtleistungsintervall gibt zu dem Zeitpunkt und zu der Gesamtladung des zugeordneten Bereichspunktes einen einzuhaltenden Bereich für eine zwischen der Ladeinfrastruktur und dem elektrischen Versorgungsnetz auszutauschende Gesamtaustauschleistung vor. Der Flexibilitätsbereich gibt also einen Bereich vor, in dem sich der Gesamtladezustand bewegen kann. Zwischen der Ladeinfrastruktur und dem elektrischen Versorgungsnetz darf eine Leistung nur so ausgetauscht werden, dass sich immer nur Gesamtladezustände ergeben, die in dem Flexibilitätsbereich liegen. Es kann also, um ein anschauliches Extrembeispiel zu nennen, keine Leistung aus dem elektrischen Versorgungsnetz von der Ladeinfrastruktur bezogen werden, wenn bereits alle Elektrofahrzeuge voll geladen sind und der Gesamtladezustand somit an der Obergrenze ist. Ebenso wenig kann Leistung in das elektrische Versorgungsnetz eingespeist werden, wenn alle Elektrospeicher der Ladeinfrastruktur leer sind.

Ist aber ein Gesamtladezustand in dem Flexibilitätsbereich, vielleicht sogar weit weg von den beiden Grenzen, bedeutet das noch lange nicht, dass beliebig viel Leistung zwischen der Ladeinfrastruktur und dem elektrischen Versorgungsnetz ausgetauscht werden kann. Neben Grenzen, die durch einen Netzanschlusspunkt zwischen der Ladeinfrastruktur und dem elektrischen Versorgungsnetz gegeben sind, wobei auch mehrere solcher Netzanschlusspunkte vorgesehen sein können, sind aber auch Besonderheiten der Elektrospeicher zu beachten. Elektrospeicher können nicht beliebig schnell aufgeladen oder entladen werden. Zusätzlich zu physikalischen Grenzen gibt es auch Grenzen, die nur unter Schädigung des Elektrospeichers überschritten werden können. Dadurch ergibt sich also ein weiteres einzuhaltendes Kriterium, nämlich, dass die maximal in das elektrische Versorgungsnetz einzuspeisende Leistung begrenzt ist und auch die maximal aus dem elektrischen Versorgungsnetz entnehmbare Leistung begrenzt ist. Daraus ergibt sich eine Obergrenze und eine Untergrenze und diese beiden Grenzen bilden für den jeweiligen Bereichspunkt ein Gesamtleistungsintervall.

Diese Leistungsgrenzen sind aber für die Elektrospeicher nicht immer gleich. So kann beispielsweise ein fast voll geladener Elektrospeicher nicht mehr mit so viel Leistung geladen werden wie ein beispielsweise nur halbvoller Elektrospeicher. Auch das Entladen kann von dem jeweiligen Ladezustand abhängen. Um das zu berücksichtigen, ist jedem Bereichspunkt ein Gesamtleistungsintervall zugeordnet.

Die Gesamtleistungsintervalle aller Bereichspunkte spannen somit einen für die Gesamtaustauschleistung einzuhaltenden Gesamtleistungsraum über den Flexibilitätsbereich auf. Ausgehend von dem anschaulichen Beispiel, dass der Flexibilitätsbereich in einem Zeit-Gesamtladezustands-Diagramm dargestellt ist, ergibt sich durch diese Gesamtleistungsintervalle eine dreidimensionale Darstellung. Der Gesamtleistungsraum führt dann für das Diagramm eine dritte Dimension ein. Der Gesamtleistungsraum ist dann wie ein Gewölbe über dem Flexibilitätsbereich, und auch unter dem Flexibilitätsbereich. In jedem Bereichspunkt ist der Abstand zwischen oberem Gewölbe und unterem Gewölbe das jeweilige Gesamtleistungsintervall. Der Gesamtleistungsraum kann als der Raum zwischen diesen beiden Gewölben verstanden werden.

Um nun einen zeitlichen Verlauf einer Austauschleistung zu planen, also als Austauschleistungsverlauf über die Zeit vorzugeben, bildet dieser Gesamtleistungsraum eine einzuhaltende Grenze. Mit anderen Worten muss ein zeitlicher Austauschleistungsverlauf so ausgestaltet sein, dass er vollständig zwischen diesen anschaulich genannten Gewölben verläuft und allenfalls das obere oder untere Gewölbe, die auch als Gewölbedecke und Gewölbeboden bezeichnet werden können, berühren darf. Auch seitlich darf dieser Gesamtleistungsraum nicht verlassen werden.

Es wurde aber erkannt, dass ein solcher Gesamtleistungsraum nicht als feste Vorgabe für die Ladeinfrastruktur bestimmt werden kann, sondern veränderlich ist. Insbesondere liegt jede Nacht wieder ein neuer Gesamtleistungsraum vor, um bei dem anschaulichen Beispiel des nächtlichen Ladens der Elektrofahrzeuge zu bleiben.

Besonders wurde erkannt, dass die Einzelladezustände der Leistungseinheiten, also insbesondere der Elektrofahrzeuge, zu berücksichtigen sind. Somit wird vorgeschlagen, dass das Gesamtleistungsintervall eines Bereichspunktes von den Einzelladezuständen der Leistungseinheiten abhängt, die dem Gesamtladezustand des Bereichspunktes zugrunde liegen. Jeder Bereichspunkt weist also einen Gesamtladezustand auf und dieser ergibt sich aus den Einzelladezuständen, nämlich insbesondere als Summe dieser Einzelladezustände. Es wurde aber auch erkannt, dass für die Berücksichtigung des Gesamtleistungsintervalls die Einzelladezustände ebenfalls zu berücksichtigen sind. Somit ergibt sich der Vorschlag, dass nicht nur der Gesamtladezustand, sondern auch das Gesamtleistungsintervall von den Einzelladezuständen abhängt.

Jeweils ein Bereichspunkt weist also einen Gesamtladezustand auf. Dieser Gesamtladezustand des Bereichspunktes weist ein Gesamtleistungsintervall auf und dieses Gesamtleistungsintervall hängt von den Einzelladezuständen dieses Bereichspunktes ab.

Dadurch kann nun ein Gesamtleistungsintervall für jeden Bereichspunkt sehr genau und auch an die jeweilige Situation angepasst bestimmt werden. Dadurch kann das anschaulich genannte Gewölbe, also Gewölbedecke und Gewölbeboden, sehr genau bestimmt werden. Besonders wird berücksichtigt, dass ein Bereichspunkt immer denselben Gesamtladezustand aufweist, trotzdem aber unterschiedliche Gesamtleistungsintervalle aufweisen kann. Mit anderen Worten kann in einer Nacht, um dieses Beispiel wieder aufzugreifen, ein bestimmter Bereichspunkt ein bestimmtes Gesamtleistungsintervall aufweisen, und in der nächsten Nacht ein anderes Gesamtleistungsintervall aufweisen, das zum Beispiel kleiner oder größer ist als in der Nacht zuvor.

Beispielsweise kann ein Bereichspunkt durch eine bestimmte Zeit, zum Beispiel 1 Uhr morgens, und einen bestimmten Gesamtladezustand, zum Beispiel 50 %, gekennzeichnet sein. Dieser beispielhafte Bereichspunkt könnte etwa in der Mitte des Flexibilitätsbereichs liegen, um es weiter zu veranschaulichen. Diesem Gesamtladezustand von 50 % können unterschiedliche Einzelladezustände zugrunde liegen. Beispielsweise können alle Elektrospeicher, die synonym auch als Akkus bezeichnet werden können, einen Einzelladezustand von 50 % aufweisen. Alle Speicher können dann maximale Lade- und Entladeleistung bereitstellen. Entsprechend ergibt sich auch für das zugeordnete Gesamtleistungsintervall die maximale Spanne.

Der Gesamtladezustand von 50 % kann sich aber auch, um einen Extremfall zu nennen, dadurch zusammensetzen, dass die Hälfte der Speicher zu 100 % geladen sind, und die andere Hälfte der Speicher zu 0 % geladen sind. Die zu 100 % geladenen Speicher können dann keine Leistung mehr aufnehmen, sodass sich insgesamt für das Gesamtleistungsintervall nur noch eine halbe Ladeleistung ergibt. Ebenso ergibt sich auch nur eine halbe Entladeleistung, denn die andere Hälfte der Speicher ist leer und kann keine Leistung abgeben.

Es kommen aber auch Zwischensituationen in Betracht, wenn beispielsweise, was immer noch ein einfaches Beispiel ist, die Hälfte der Speicher zu 90 % geladen sind und die andere Hälfte der Speicher zu 10 %. Auch dann ergibt sich ein Gesamtladezustand von 50 %. Bei diesem Beispiel können zwar noch alle Speicher sowohl geladen als auch entladen werden, da die Speicher aber fast voll oder fast leer sind, ist ihre Lade- bzw. Entladeleistung bereits reduziert. Es könnte sich beispielsweise eine Ladeleistung und Entladeleistung von jeweils 70 % ergeben.

Somit wurde erkannt, dass auch für das jeweilige Gesamtleistungsintervall die Einzelladezustände zu berücksichtigen sind, da sie selbst bei gleichem Gesamtladezustand zu unterschiedlichen Ergebnissen führen können.

Zu dem oben genannten vereinfachten Beispiel sind natürlich diverse weitere Aspekte zu berücksichtigen. Dazu zählt, dass nur an die Ladestruktur angeschlossene Einheiten zu berücksichtigen sind und damit auch Veränderungen resultieren, wenn ein Elektrofahrzeug angeschlossen wird oder sich trennt. Auch eine Auslastung der Ladeinfrastruktur kann im Übrigen eine Rolle spielen, was zusätzlich berücksichtigt werden kann. Hier kann Berücksichtigung finden, wie weit Ladeleistung oder Entladeleistung zwischen einzelnen Ladeterminals, die auch als Ladepunkte bezeichnet werden können, verteilt werden kann. Auch weitere Randaspekte kommen in Betracht, wie beispielsweise, wenn aus Planungsgründen innerhalb der Ladeinfrastruktur Elektrospeicher umgeladen werden. Ein solches Umladen ist bezogen auf die Austauschleistung zwischen Ladeinfrastruktur und elektrischem Versorgungsnetz neutral, begrenzt gleichwohl die austauschbare Leistung.

Gemäß einem Aspekt wird vorgeschlagen, dass einem Einzelladezustand einer Leistungseinheit jeweils ein Einzelleistungsintervall zugeordnet wird, das für diesen Einzelladezustand einen einzuhaltenden Bereich für die Einzelaustauschleistung vorgibt, die die Leistungseinheit mit der Ladeinfrastruktur austauschen kann. Jede Leistungseinheit, die betrachtet wird, wird somit ein Einzelleistungsintervall zugeordnet. Das begrenzt die Leistung, die diese Leistungseinheit abgeben bzw. aufnehmen kann. Dieses Einzelleistungsintervall hängt dabei von dem Ladezustand der Leistungseinheit ab, also von dem Einzelladezustand. Dieses Einzelleistungsintervall kann beispielsweise an eine zentrale Steuereinheit zur Auswertung übergeben werden, insbesondere zusammen mit dem Einzelladezustand.

Dazu wird vorgeschlagen, dass das Gesamtleistungsintervall eines Bereichspunktes jeweils in Abhängigkeit von erfassten, berechneten und/oder vorhergesagten Einzelladezuständen des Bereichspunktes und ihren zugeordneten Einzelleistungsintervallen erstellt wird. Ein Bereichspunkt weist also einen Gesamtladezustand auf und zu dem Bereichspunkt gehören auch die Einzelladezustände der angeschlossenen Leistungseinheiten. Aus diesen Einzelladezuständen ergibt sich der Gesamtladezustand des Bereichspunktes. Zusätzlich sind aber die Einzelleistungsintervalle gegeben, die somit jeweils eine zusätzliche Eigenschaft oder Randbedingung des betreffenden Einzelladezustands darstellen. Diese bilden dann die Basis für das Erstellen des Gesamtleistungsintervalls des Bereichspunktes. Insbesondere entspricht das Gesamtleistungsintervall im Wesentlichen einer Summe der Einzelleistungsintervalle. Geringe Abweichungen zur Summe können sich durch Verluste ergeben. Wenn diese Verluste vernachlässigt werden, reicht es aus, die Summe zu betrachten. Insoweit wird hier eine Intervallrechnung zugrunde gelegt, bei der Intervalle so addiert werden, dass die Untergrenzen zu einer neuen Untergrenze aufaddiert werden und die Obergrenzen zu einer neuen Obergrenze aufaddiert werden.

Die zugrunde gelegten Einzelladezustände können erfasst, also insbesondere gemessen, aber auch berechnet und/oder vorhergesagt sein. Hier wird besonders berücksichtigt, dass schließlich ein Austauschleistungsverlauf bestimmt oder insbesondere geplant werden soll. Dazu sollen die Einzelladezustände also im Voraus berücksichtigt werden, sodass vorhergesagte Einzelladezustände berücksichtigt werden. Solche Einzelladezustände können besonders dadurch vorhergesagt werden, dass das Verhalten der Elektrofahrzeuge antizipiert wird, um Anfangszustände der Einzelladezustände zu Beginn des Steuerzeitraums vorherzusagen. Für weitere, später liegende Bereichspunkte kann zudem ein Verlauf, also eine Veränderung des jeweiligen Einzelladezustands, vorhergesagt werden. Dies kann beispielsweise aufgrund eines zu erwartenden Ladeverlaufs vorgenommen werden. In diesem Fall lägen sowohl vorhergesagte als auch berechnete Einzelladezustände vor.

Es kommt aber auch in Betracht, dass für spätere Berücksichtigungen, die nicht für die Vorhersage benötigt werden, sondern beispielsweise für einen späteren Angleich, auch tatsächlich erfasste, insbesondere gemessene Einzelladezustände verwendet werden können.

Gemäß einem Aspekt wird vorgeschlagen, dass für die Bestimmung jedes Gesamtleistungsintervalls jeweils eine positive und eine negative Gesamtleistungsgrenze bestimmt wird, um jeweils eine Asymmetrie des Gesamtleistungsintervalls zu berücksichtigen. Hier wurde besonders erkannt, dass zwischen verfügbarer Ladeleistung und verfügbarer Entladeleistung zu unterscheiden ist. Das kann einerseits in der Natur der Elektrospeicher liegen, die unterschiedlich schnell ge- und entladen werden können. Es wurde aber auch erkannt, dass sich dies durch die jeweiligen Einzelladezustände ergeben kann. Auch kann eine Ladeinfrastruktur so eingerichtet sein, dass sie eine unterschiedliche maximale Ladeleistung und maximale Entladeleistung aufweist. Dies kann in den hardwareseitigen Aufbau begründet sein, in dem zum Beispiel die Fahrzeugseitigen Wandler zum Laden größer dimensioniert sind, als die Wandler zum Entladen.

Besonders ist zu berücksichtigen, dass die Elektrospeicher zu Beginn des Steuerzeitraums eher entladen sind und damit wenig Leistung abgeben können, aber viel aufnehmen können. Zum Ende des Steuerzeitraums hin sollten sie geladen werden, sodass sie dann nicht mehrviel Leistung aufnehmen, aber viel abgeben können. Dabei wird vorgeschlagen, dass die positive Gesamtleistungsgrenze die Leistung begrenzt, die die Ladeinfrastruktur maximal aufnehmen kann, und die negative Gesamtleistungsgrenze die Leistung begrenzt, die die Ladeinfrastruktur maximal abgeben kann. Insbesondere wird vorgeschlagen, dass berücksichtigt wird, dass den Einzelleistungsintervallen jeweils eine positive und eine negative Einzelleistungsgrenze zugeordnet sein kann. Hierdurch kann die vorgeschlagene Berücksichtigung der möglichen Asymmetrie des Gesamtleistungsintervalls durchgeführt werden.

Gemäß einem Aspekt wird vorgeschlagen, dass das jeweilige Gesamtleistungsintervall jeweils in Abhängigkeit von einem erfassten oder vorhergesagten Anfangsgesamtladezustand bestimmt wird, der dem Gesamtladezustand zu Beginn des Steuerzeitraums entspricht. Außerdem oder alternativ wird vorgeschlagen, dass das jeweilige Gesamtleistungsintervall in Abhängigkeit von erfassten oder vorhergesagten Anfangseinzelladezuständen bestimmt wird, die die Einzelladezustände zu Beginn des Steuerzeitraums bezeichnen. Außerdem wird für beide Varianten vorgeschlagen, dass das jeweilige Gesamtleistungsintervall jeweils auch in Abhängigkeit von einer Leistungsverteilvorschrift bestimmt wird, die vorgibt, wie eine Gesamtaustauschleistung auf die einzelnen Leistungseinheiten aufgeteilt wird.

Zur Vorhersage ist somit besonders wichtig, wie die Anfangssituation zu Beginn des Steuerzeitraums aussieht. Sind die meisten Speicher oder alle Speicher sehr stark entladen, können sie viel Austauschleistung aufnehmen, aber eher weniger Austauschleistung abgeben, und umgekehrt.

Eine differenziertere Aussage lässt sich treffen, wenn nicht nur der Anfangsgesamtladezustand bestimmt wird, sondern die Einzelladezustände zu Beginn des Steuerzeitraums betrachtet werden, also die Anfangseinzelladezustände betrachtet werden. Damit kann recht gut ein Gesamtleistungsintervall zu Beginn bestimmt werden. Das hängt natürlich auch davon ab, wie gut die Vorhersage ist.

Beginnt nun aber der Steuerzeitraum und werden die Elektrospeicher entsprechend geladen oder zeitweise auch für eine Stützleistung entladen, so verändert sich diese Anfangssituation. Ist nun die Leistungsverteilvorschrift bekannt, kann diese berücksichtigt werden und der Verlauf der Einzelladezustände ist ausgehend von den Anfangseinzelladezuständen gut bestimmbar. Dann sind auch später die Einzelleistungsintervalle gut bestimmbar und daraus das Gesamtleistungsintervall ableitbar. Eine solche Leistungsverteilvorschrift kann beispielsweise so gestaltet werden, dass eine Austauschleistung auf alle Elektrospeicher gleichmäßig verteilt wird. Ist der Austauschleistungsverlauf bekannt, ist somit der Verlauf der Einzelladezustände berechenbar, oder zumindest vorhersehbar, je nachdem, wie genau der Austauschleistungsverlauf bekannt ist.

Aber auch nur ausgehend von einem Anfangsgesamtladezustand kann die Berücksichtigung der Leistungsteilvorschrift helfen, also auch dann, wenn die Anfangseinzelladezustände nicht bekannt sind oder nicht vorhergesagt wurden. Aus einer solchen Leistungsverteilvorschrift kann sich nämlich eine grundsätzliche Entwicklung der Einzelladezustände über die Zeit ableiten lassen. Besonders dann, wenn die Leistungsverteilvorschrift so ausgestaltet ist, dass sie die Einzelladezustände so steuert, dass sie sich einander angleichen, kann davon ausgegangen werden, dass kein Einzelladezustand frühzeitig 100 % erreicht.

Daraus kann das jeweilige Gesamtleistungsintervall abgeleitet werden. Es kann nämlich, um bei dem Beispiel zu bleiben, abgeleitet werden, dass nicht frühzeitig die Situation auftritt, dass ein Elektrospeicher oder mehrere Elektrospeicher zur Leistungsaufnahme wegfallen.

Gemäß einem Aspekt wird vorgeschlagen, dass zum Vorgeben eines Austauschleistungsverlaufs ein Vorgabebereich bestimmt wird. Ein solcher Vorgabebereich entspricht dem Flexibilitätsbereich oder ist ein Teil davon, also eine echte Untermenge. Der Vorgabebereich kann also wie der Flexibilitätsbereich sein, oder kleiner.

Der Vorgabebereich weist somit auch mehrere Bereichspunkte auf, denen jeweils ein Gesamtladezustand mit einem Vorgabeleistungsintervall zugeordnet ist. Besonders weist der Vorgabebereich die Bereichspunkte auf oder kann sie aufweisen, die der Flexibilitätsbereich ebenfalls aufweist, sofern sie nicht außerhalb des Vorgabebereichs liegen. Diesen Bereichspunkten bzw. ihrem jeweiligen Gesamtladezustand ist zudem ein Vorgabeleistungsintervall zugeordnet. Dieses Vorgabeleistungsintervall kann sich aber von dem oben bereits beschriebenen Gesamtleistungsintervall unterscheiden, was unten noch erläutert wird.

Jedenfalls spannen die Vorgabeleistungsintervalle einen zulässigen Vorgabeleistungsraum über den Vorgabebereich auf, in dem der Austauschleistungsverlauf liegen soll. Insoweit wird hier wieder ein Raum aufgespannt, der dem oben anschaulich beschriebenen Gewölberaum mit oberem und unterem Gewölbe entspricht. Insoweit bildet jedes Vorgabeleistungsintervall auch ein Gesamtleistungsintervall, allerdings gilt für zumindest einige der Vorgabeleistungsintervalle, dass sie in Abhängigkeit von einer ungünstigen Konstellation aller Einzelladezustände des Bereichspunktes bestimmt werden, oder dass sie außerdem oder alternativ in Abhängigkeit von einem ungünstigen Verlauf einer Austauschleistung bestimmt werden. Eine ungünstige Konstellation kann auch synonym als nicht optimale Konstellation bezeichnet werden, nämlich nicht optimal zum Erreichen eines maximalen Gesamtleistungsintervalls. Ebenso kann ein ungünstiger Verlauf einer Austauschleistung synonym als nicht optimaler Verlauf einer Austauschleistung bezeichnet werden, nämlich nicht optimal zum Erreichen eines maximalen Gesamtleistungsintervalls.

Hier liegt die Überlegung zugrunde, dass ein Gesamtleistungsintervall, nämlich das Vorgabeleistungsintervall, bestimmt werden soll, obwohl die zugrundeliegenden Einzelladezustände und damit die zugrundeliegenden Einzelleistungsintervalle nicht genau bekannt sind. Besonders soll hier auch eine Vorhersage gemacht werden, um dann einen Austauschleistungsverlauf bestimmen zu können. Insoweit ist hier ein Vorgabeleistungsintervall eine Vorhersage eines Gesamtleistungsintervalls.

Um nun sicherzugehen, dass ein Austauschleistungsverlauf trotzdem vorgegeben werden kann, der nämlich in diesem Gewölbe liegen soll, das durch viele Vorgabeleistungsintervalle aufgespannt wird, wird quasi vom ungünstigsten Fall ausgegangen, oder zumindest von einem ungünstigen realistischen Fall.

Insoweit ist eine günstige Konstellation aller Einzelladezustände, dass sie alle denselben prozentualen Einzelladezustand aufweisen. Das entspricht dann dem oben geschilderten Beispiel, bei dem ein Gesamtladezustand von 50 % das Resultat von gleichen Einzelladezuständen ist, die selbst auch alle 50 % betragen. Insoweit ist eine ungünstige Konstellation, wenn die Einzelladezustände stark unterschiedlich sind. Dadurch vermindert sich nämlich das Gesamtleistungsintervall. Und ein solches vermindertes Gesamtleistungsintervall wird hier als Vorgabeleistungsintervall bezeichnet.

Eine ungünstige Konstellation aller Einzelladezustände kann eine sein, bei der die Standardabweichung der Einzelladezustände in Prozent oberhalb eines Referenzwertes liegt. Der Referenzwert kann insbesondere 10 % oder 20 % betragen. Eine ungünstige Konstellation ist insbesondere eine solche, bei der die Einzelladezustände einen Maximalwert, insbesondere 100 %, oder einen Minimalwert, insbesondere 0 %, aufweisen. Ausgehend von dem Gesamtladezustand des betrachteten Bereichspunktes werden die Einzelladezustände also so teilweise auf 100 % und teilweise auf 0 % gesetzt, dass sie in Summe den Gesamtladezustand ergeben.

Ebenfalls kann der Verlauf der Austauschleistung, also der Austauschleistungsverlauf, ungünstig sein. Ein günstiger Austauschleistungsverlauf ist ein solcher, der über den gesamten Steuerzeitraum einen konstanten, nämlich kleinen Wert aufweist, um die vorgegebene Ladeenergie über den Steuerzeitraum bereitzustellen. Ein ungünstiger Austauschleistungsverlauf ist insbesondere einer, bei dem die Austauschleistung konstant einen Maximalwert aufweist, der einem durch die Ladeinfrastruktur vorgegebenen maximalen Leistungswert entspricht. Insbesondere weist die Austauschleistung diesen Maximalwert zu Beginn des Steuerzeitraums auf, bis eine angeforderte Ladeenergiemenge bereitgestellt wurde, also insbesondere bis alle Speicher geladen wurden.

Mit diesen ungünstigen Konstellationen werden dann für den Vorgabebereich für mehrere Bereichspunkte Vorgabeleistungsintervalle und damit der Vorgabeleistungsraum bestimmt, nämlich insbesondere als Vorhersage. Wird dann der Austauschleistungsverlauf so bestimmt, dass er in diesem Vorgabeleistungsraum liegt, so kann sichergestellt werden, dass diese Austauschleistung dann auch tatsächlich wie durch den Austauschleistungsverlauf vorgegeben und geplant bereitgestellt werden kann, natürlich im Rahmen der Unsicherheiten der Vorhersage.

Insbesondere wird vorgeschlagen, dass jedes Vorgabeleistungsintervall ein vorhergesagtes Gesamtleistungsintervall bildet, das in Abhängigkeit von einer Vorhersage eines Gesamtleistungsanfangszustandes und/oder einer Vorhersage von Einzelladeanfangszuständen vorhergesagt wurde. Somit wird eine Möglichkeit für die Vorhersage des Austauschleistungsverlaufs geschaffen und diese basiert auf vorhergesagten Einzelladeanfangszuständen und/oder einem vorhergesagten Gesamtleistungsanfangszustand.

Vorzugsweise wird auch hier vorgeschlagen, dass die Leistungsverteilvorschrift berücksichtigt wird. Insoweit werden besonders ungünstige Einzelleistungsverläufe nur so ungünstig angenommen, wie sie unter Berücksichtigung der Leistungsverteilvorschrift tatsächlich auch auftreten könnten.

Gemäß einem Aspekt wird vorgeschlagen, dass ein Austauschleistungsverlauf in Abhängigkeit von dem Vorhersagebereich so vorgegeben wird, dass der Austauschleistungsverlauf innerhalb des Vorgabeleistungsraums liegt. Besonders dafür ist das Bestimmen dieses Vorgabeleistungsraums vorgesehen. Dazu wird optional vorgeschlagen, dass auf eine Anforderung geprüft wird, ob ein vorgeschlagener Austauschleistungsverlauf, der zumindest teilweise nicht innerhalb des Vorgabeleistungsraums liegt, zumindest aber innerhalb des Gesamtleistungsraums liegt.

Hier liegt besonders die Idee zugrunde, dass über den Vorgabeleistungsraum ein sicherer Bereich vorgegeben werden kann, der zum Vorgeben eines Austauschleistungsverlaufs verwendet werden kann. Besonders kann ein solcher Vorgabeleistungsraum von der Ladeinfrastruktur an eine externe Einheit gegeben werden, zum Beispiel an eine Einheit, die ein Stromvermarkter verwendet, der auch als Direktvermarkter bezeichnet werden kann. Hierdurch kann eine reduzierte Informationsmenge übertragen werden und der Direktvermarkter kann damit planen. Damit ist ein gutes Ergebnis, möglicherweise aber nicht ein optimales Ergebnis erzielbar.

Somit kann eine erste Planung von dem beispielhaft genannten Direktvermarkter durchgeführt werden. Wenn dann das Bedürfnis besteht, diese Planung noch zu verbessern, also beispielsweise zu einem günstigen Zeitraum noch mehr Leistung zu übertragen, so würde hierdurch eine Grenze des Vorgabeleistungsraums überschritten werden, was eigentlich nicht zulässig wäre. Es kann dann aber eine Anschlussprüfung vorgenommen werden, ob zwar der Vorgabeleistungsraum verlassen wird, nicht aber der Gesamtleistungsraum verlassen wird.

Über den Gesamtleistungsraum hat der Direktvermarkter bzw. die externe Einheit, die er dafür verwendet, keine Information. Dies muss insbesondere bei der Ladeinfrastruktur angefragt werden. Die Ladeinfrastruktur hat sehr viel bessere Kenntnis über die einzelnen Elektrofahrzeuge und damit auch über die einzelnen Ladezustände, also die Einzelladezustände mit ihren Einzelleistungsintervallen. Daher kann nicht von vornherein auf den Gesamtleistungsraum geprüft werden, weil erst die Ladeinfrastruktur diese Prüfung vornehmen kann. Es kommt aber auch in Betracht, dass eine Veränderung des Austauschleistungsverlaufs erst später durchgeführt wird, nämlich dann, wenn genauere Informationen zu den Einzelladezuständen einschließlich der Einzelleistungsintervalle vorliegen.

Besonders kann der Vorgabeleistungsraum zur Vorgabe eines Austauschleistungsverlaufs verwendet werden, die beispielsweise einen Tag oder noch länger vor dem Steuerzeitraum getätigt wird. Wenn dann den wenigstens einen Tag später dieser Steuerzeitraum tatsächlich beginnt, das Laden der Elektrofahrzeuge also tatsächlich beginnt, kann dann ein Bedürfnis auftreten, die Austauschleistung noch zu verändern. Wenn dann also der Austauschleistungsverlauf, der vorgegeben wurde, verändert werden soll, kann dies mithilfe der aktuellen Werte, insbesondere erfassten Werte der Einzelladezustände überprüft werden.

Gemäß einem Aspekt wird vorgeschlagen, dass für den Steuerzeitraum eine angeforderte Austauschenergie vorgegeben wird, die eine Energie angibt, die die Ladeinfrastruktur für den Steuerzeitraum zum Laden der Leistungseinheiten angefordert hat. Auch das kann übrigens das Ergebnis einer Vorhersage sein, nämlich die vorhersagt, wie viel Energiebedarf besteht, wenn die Elektrofahrzeuge am Ende eines Zyklus, z.B. abends, zum Laden an die Ladeinfrastruktur zurückgekehrt sind. Es kann aber auch ein Erfahrungswert genommen werden, der zum Beispiel im letzten vergleichbaren Steuerzeitraum aufgetreten ist. Diese Energie soll also bereitgestellt werden und dafür steht der Steuerzeitraum zur Verfügung. Entsprechend wird in einem Leistungsbestimmungsschritt der Austauschleistungsverlauf in Abhängigkeit von der angeforderten Austauschenergie bestimmt. Der Austauschleistungsverlauf gibt also für den Steuerzeitraum einen Verlauf der Austauschleistung vor. Trotzdem damit Energie in die Speicher geladen werden soll, kommt dennoch in Betracht, dass ein Teil des Austauschleistungsverlaufs negativ ist, um eine Stützleistung dem Netz bereitzustellen. Entscheidend ist, dass das Gesamtintegral des Austauschleistungsverlaufs über den Steuerzeitraum der angeforderten Austauschenergie entspricht.

Überhaupt, nicht nur zu diesem Aspekt, wird die Austauschleistungsverlauf in Abhängigkeit von der angeforderten Austauschenergie vorgegeben.

Jedenfalls wird weiter vorgeschlagen, in einem Verlaufsbestimmungsschritt in Abhängigkeit von dem Austauschleistungsverlauf ein zeitlicher Gesamtladezustandsverlauf vorzugegeben. Der Austauschleistungsverlauf wurde also bestimmt und der gibt vor, wie die Speicher insgesamt geladen werden sollen. Entsprechend resultiert ein Verlauf des Gesamtladezustands.

In einem Intervallbestimmungsschritt werden Gesamtleistungsintervalle für Bereichspunkte des Gesamtladezustands bestimmt. Hier brauchen also nur die Bereichspunkte berücksichtigt zu werden, die auf dem Gesamtladezustandsverlauf liegen. Der Gesamtladezustandsverlauf bildet eine Linie durch den Flexibilitätsbereich, um bei der anschaulichen Darstellung des Zeit-Gesamtladezustands-Diagramms zu bleiben. Diese Linie ist somit eine Auswahl aus allen Bereichspunkten, und nur für diese Bereichspunkte brauchen die Gesamtleistungsintervalle bestimmt zu werden.

Diese Bestimmung kann so durchgeführt werden, dass auch mithilfe der Leistungsverteilvorschrift berechnet wird, wie sich die Einzelladezustände über die Zeit verhalten. Damit ist dann auch zu jedem Zeitpunkt bekannt, wie sich die Einzelleistungsintervalle entwickeln und aus denen kann jeweils das Gesamtleistungsintervall bestimmt werden.

In einem Prüfschritt wird dann überprüft, ob der in dem Leistungsbestimmungsschritt vorgegebene Austauschleistungsverlauf innerhalb der Gesamtleistungsintervalle bleibt, die in dem Intervallbestimmungsschritt vorgegeben wurden. Im Grunde bilden hier die Gesamtleistungsintervalle ein Leistungsband entlang des zeitlichen Gesamtladezustandsverlaufs. Die jeweilige Austauschleistung muss innerhalb dieses Bandes liegen. Das ist eine Möglichkeit, die Austauschleistung vorzugeben und zu prüfen, ob sie die Anforderungen erfüllt und damit auch umsetzbar ist.

Insbesondere wird vorgeschlagen, dass der Leistungsbestimmungsschritt unter Berücksichtigung des in dem Intervallbestimmungsschritt bestimmten Gesamtleistungsintervall wiederholt wird, wenn in dem Prüfschritt festgestellt wurde, dass der Austauschleistungsverlauf nicht innerhalb der Gesamtleistungsintervalle geblieben ist, das Leistungsband also verlassen hat. Dann können die Schritte wiederholt werden und ein entsprechend abgeänderter Austauschleistungsverlauf vorgegeben werden.

Der Verlaufsbestimmungsschritt, der Intervallbestimmungsschritt und der Prüfschritt werden dabei so oft wiederholt, bis in dem Prüfschritt festgestellt wurde, dass der vorgegebene Austauschleistungsverlauf innerhalb der Gesamtleistungsintervalle bleibt. Meist dürfte allerdings ein einziger Iterationsschritt ausreichen, denn bei der Prüfung, dass ein oder mehrere Gesamtleistungsintervalle überschritten wurden, ergibt sich auch, wie stark sie überschritten wurden, sodass eine sinnvolle Anpassung resultiert.

Alternativ kann der Vorlaufbestimmungsschritt, der Intervallbestimmungsschritt und der Prüfschritt in einem geschlossenen Vorgabealgorithmus ohne Iteration durchgeführt werden und das Vorgeben des Austauschleistungsverlaufs unter Berücksichtigung der Gesamtleistungsintervalle mittels des Vorgabealgorithmus erfolgen. Es ist also auch möglich, eine geschlossene Lösung vorzuschlagen. Besonders eine numerische Lösung ist mit modernen Rechenprogrammen ermittelbar. Ansonsten kann auch ein entsprechendes Gleichungssystem gegebenenfalls unter Linearisierung der nichtlinearen Elemente gelöst werden.

Gemäß einem Aspekt wird vorgeschlagen, dass die Leistungsverteilvorschrift, die vorgibt, wie eine Gesamtaustauschleistung auf die einzelnen Leistungseinheiten aufgeteilt wird, das Aufteilen der Gesamtaustauschleistung auf die einzelnen Leistungseinheiten so vorgibt, dass Einzelladezustände sich einem mittleren Ladezustand aller Leistungseinheiten, die an der Ladeinfrastruktur angeschlossen sind, annähern. Dadurch kann erreicht werden, dass selbst bei ungünstigen Anfangsbedingungen der Einzelladezustände eine Vergleichmäßigung der Einzelladezustände nach einiger Zeit erreicht werden kann. Das führt dazu, dass alle Leistungseinheiten möglichst große Einzelleistungsintervalle aufweisen, sodass ein großes Gesamtleistungsintervall resultieren kann. Das Verwenden einer solchen Leistungsverteilvorschrift kann auch für die Vorhersage günstig sein, weil dadurch nämlich ein solch günstiger Verlauf der Einzelladezustände entsprechend der Vorhersage zugrunde gelegt werden kann.

Insbesondere wird vorgeschlagen, dass die Leistungsverteilvorschrift so ausgestaltet ist, dass sich eine Standardabweichung der Einzelladezustände verringert. Eine Standardabweichung ist die mittlere Abweichung von einem Erwartungswert. Das kann hier als mittlere Abweichung der Einzelladezustände von einem mittleren Ladezustand verstanden bzw. so angewendet werden. Somit wird besonders vorgeschlagen, dass Speicher mit Einzelladezuständen über einen mittleren Einzelladezustand schwächer geladen werden als Speicher mit einem Einzelladezustand unterhalb des mittleren Einzelladezustands. Dadurch verringern sich deren Abstände zum mittleren Einzelladezustand und dadurch reduziert sich die Standardabweichung. Dadurch können die Einzelleistungsintervalle und damit auch das Gesamtleistungsintervall des jeweiligen Bereichspunktes erhöht werden.

Gemäß einem Aspekt wird vorgeschlagen, dass Gesamtleistungsintervalle in Abhängigkeit von während dem Steuerzeitraum ankommenden oder abfahrenden Elektrofahrzeugen bestimmt oder verändert werden. Hier wurde besonders erkannt, dass auch während des Steuerzeitraums noch Veränderungen auftreten können, und dass das Ankommen oder Abfahren von Elektrofahrzeugen eine signifikante Größe sein kann, die somit berücksichtigt wird. Die Berücksichtigung kann über die Berücksichtigung der Einzelladezustände erfolgen, die dadurch hinzukommen oder wegfallen.

Gemäß einem Aspekt wird vorgeschlagen, dass die Leistungsverteilvorschrift, die vorgibt, wie eine Gesamtaustauschleistung auf die einzelnen Leistungseinheiten aufgeteilt wird, das Aufteilen der Gesamtaustauschleistung auf die einzelnen Leistungseinheiten so vorgibt, dass eine positive Teilaustauschleistung, mit der jeweils eine Leistungseinheit geladen wird, in Abhängigkeit von einer Differenz des Einzelladezustands von einem zu erreichenden Ladezustand bestimmt wird. Insbesondere kann dieser zu erreichende Ladezustand 100 % betragen, also einen voll geladenen Ladezustand des jeweiligen Speichers betreffen. Die Austauschleistung ist also auf die einzelnen Leistungseinheiten aufzuteilen und das wird nicht nach der Größe der Leistungseinheiten, also nach der Größe der entsprechenden Elektrospeicher durchgeführt, sondern nach dem Abstand zwischen vorliegendem Einzelladezustand und zu erreichendem Ladezustand. Dadurch wird erreicht, dass schon gut geladene Speicher weniger schnell geladen werden als noch nicht sehr stark geladene Elektrospeicher. Dadurch wird auch ein Angleich erreicht.

Gleichzeitig wird vorgeschlagen, dass eine negative Teilaustauschleistung, mit der die Leistungseinheit also entladen wird, in Abhängigkeit von einer Differenz des Einzelladezustands von einem entladenen Ladezustand bestimmt wird. Es wird also für das Aufteilen einer Austauschleistung zum Entladen der Elektrospeicher, also zum Einspeisen in das elektrische Versorgungsnetz, die Restladung betrachtet. Das führt dazu, dass stark entladene Elektrospeicher weniger Leistung für das Einspeisen ins Netz bereitstellen als wenig entladene Speicher. Somit wir auch hier ein Angleichen erreicht. Es wurde besonders erkannt, dass bei dem Aufteilen der Leistung zwischen Laden und Entladen unterschiedlich vorzugehen ist.

Außerdem oder alternativ wird vorgeschlagen, dass bei Vorgabe einer positiven Austauschleistung, bei der Leistung aus dem elektrischen Versorgungsnetz zum Laden der Leistungseinheiten entnommen wird, Leistungseinheiten, die einen Ladezustand unterhalb eines relativen mittleren Ladezustands aufweisen, vorrangig und/oder stärker geladen werden als Leistungseinheiten, die einen Ladezustand oberhalb des relativen mittleren Ladezustands aufweisen. Hier wird als Maß also der jeweils aktuelle mittlere Ladezustand zugrunde gelegt. Hier kann besonders ein prozentualer Ladezustand verwendet werden. Damit ergibt sich eine Vorschrift, die auch bei unterschiedlich großen Speichern universell anwendbar ist. Auch hierdurch kann ein Angleichen erreicht werden.

Vorzugsweise kann das vorrangige Laden bedeuten, dass nur diese Leistungseinheiten geladen werden, die also unterhalb des mittleren Ladezustands sind. Dadurch kann ein Angleichen forciert werden. Insoweit liegt hier eine nichtlineare Aufteilung vor, die dazu führen kann, dass deutlich vor Ende des Steuerzeitraums eine vollständige Angleichung erreicht werden kann, nämlich ein Zustand, bei dem alle Einzelladezustände dann dem mittleren Ladezustand entsprechen.

Leistungseinheiten stärker zu laden kann beispielsweise bedeuten, dass sie wenigstens prozentual 1.5-fache oder wenigstens prozentual doppelte Leistung erhalten gegenüber den Leistungseinheiten, die oberhalb des mittleren Ladezustands liegen.

Außerdem wird vorgeschlagen, dass bei Vorgabe einer negativen Austauschleistung, bei der Leistung in das elektrische Versorgungsnetz zum Entladen der Leistungseinheiten eingespeist wird, Leistungseinheiten, die einen Ladezustand oberhalb des relativen mittleren Ladezustands aufweisen, vorrangig und/oder stärker entladen werden als Leistungseinheiten, die einen Ladezustand unterhalb des relativen mittleren Ladezustands aufweisen. Hier wird somit sinngemäß verfahren und die Erläuterungen zum Handhaben bei Vorgabe einer positiven Austauschleistung gelten sinngemäß. Besonders wurde auch hier erkannt, das Laden einerseits und Entladen andererseits differenziert zu betrachten.

Gemäß einem Aspekt wird vorgeschlagen, dass für den zeitlichen Gesamtladezustandsverlauf überprüft wird, ob ein am Ende des Steuerzeitraums als zu erreichender Gesamtladezustand vorgegebener Gesamtzielladezustand erreicht werden kann und/oder ob für am Ende des Steuerzeitraums als zu erreichende Einzelladezustände vorgegebene Einzelzielladezustände erreicht werden können. Insoweit wird hier eine Überprüfung vorgenommen, ob besonders der vorgegebene Austauschleistungsverlauf zu der gewünschten Ladesituation geführt hat. Hier wurde besonders erkannt, dass sowohl Verluste als auch falsch angenommene Anfangsladezustände zu Abweichungen führen können. Diese sollten möglichst frühzeitig erkannt werden, um entsprechend nachregeln zu können.

Insbesondere wird vorgeschlagen, dass zu einem oder mehreren Prüfzeitpunkten in dem Steuerzeitraum die jeweilige Überprüfung durchgeführt wird. So kann ein zeitlich erster Abschnitt überprüft werden und dann antizipiert werden, wie sich der weitere Verlauf entwickeln wird. Abweichungen, die bis zu einem Prüfzeitpunkt aufgetreten sind, können auf die verbleibende Zeit hochgerechnet werden.

Außerdem oder alternativ wird vorgeschlagen, dass dann, wenn erkannt wurde, dass der Gesamtzielladezustand bzw. wenigstens ein Einzelzielladezustand nicht erreicht werden kann, der Gesamtleistungsverlauf verändert wird, der Austauschleistungsverlauf verändert wird und/oder die Leistungsverteilvorschrift angepasst wird. Der Gesamtleistungsverlauf kann besonders über die Veränderung des Austauschleistungsverlaufs verändert werden. Es kommt aber auch in Betracht, dass anderweitig, zum Beispiel aus Reservespeichern der Ladeinfrastruktur, Leistung beigesteuert wird.

Wenn das Ziel, nämlich der Gesamtzielladezustand oder wenigstens ein Einzelzielladezustand nicht erreicht wird, kann dies in der Leistungsverteilvorschrift liegen. Es kann dann in Betracht kommen, dass ohne Änderung des Austauschleistungsverlaufs das Ziel doch noch erreicht werden kann. Das ist offensichtlich, wenn ein Einzelzielladezustand nicht erreicht werden kann, dass dieser dann mittels Anpassung der Leistungsverteilvorschrift entsprechend stärker verändert wird.

Aber auch das Erreichen des Gesamtzielladezustands kann daran liegen, dass durch eine ungünstige Leistungsaufteilung Leistungsrestriktionen durch Einzelladezustände auftreten können, die bei einer anderen Verteilung vermieden werden können.

Gemäß einem Aspekt wird vorgeschlagen, dass für einen Steuerzeitraum und zu einem Planungszeitpunkt, der vor dem Steuerzeitraum liegt, insbesondere wenigstens einen Tag vordem Steuerzeitraum liegt, der Flexibilitätsbereich mit dem Gesamtleistungsraum und/oder der Vorgabebereich mit seinem Vorgabeleistungsraum zur Planung eines Austauschleistungsverlaufs von der Ladeinfrastruktur bestimmt und an eine externe Einheit, insbesondere an einen Leistungsanbieter übertragen wird. Somit wird eine Vorhersage für einen Austauschleistungsverlauf vorbereitet, in dem der Gesamtleistungszeitraum oder insbesondere der Vorgabeleistungszeitraum an eine externe Einheit übergeben wird, die den Austauschleistungsverlauf planen soll.

Entsprechend wird vorgeschlagen, dass in der externen Einheit ein Austauschleistungsverlauf in Abhängigkeit von dem Flexibilitätsbereich und/oder dem Vorgabebereich für den Steuerzeitraum vorgegeben wird.

Zusätzlich kann dafür eine angeforderte Austauschenergie mitberücksichtigt werden. Diese angeforderte Austauschenergie, bzw. ein entsprechender Wert, kann von der Ladeinfrastruktur zusätzlich an die externe Einheit übergeben werden.

Die externe Einheit kann dann darauf basierend den Austauschleistungsverlauf vorgeben und dazu wird vorgeschlagen, dass in dem Steuerzeitraum ein Leistungsaustausch zwischen der Ladeinfrastruktur und dem elektrischen Versorgungsnetz gemäß dem vorgegebenen Austauschleistungsverlauf durchgeführt wird.

Es wird also ein einfach zu handhabendes, aber gleichwohl Randbedingungen gut betrachtendes Werkzeug geschaffen, mit dem die Ladeinfrastruktur nur die nötigsten Informationen an die externe Einheit, also insbesondere einen Direktvermarkter, zu übertragen braucht. Dieser kann dann darauf basierend unter Berücksichtigung eigener Interessen, die Netzstabilität aber auch Beschaffungskosten betreffen können, einen Austauschleistungsverlauf vergleichsweise frei vorgeben. Es brauchen nur der Gesamtleistungsraum bzw. der Vorgabeleistungsraum berücksichtigt zu werden.

Erfindungsgemäß wird zudem eine Ladeinfrastruktur vorgeschlagen. Eine solche Ladeinfrastruktur weist eine Steuereinrichtung auf, die wenigstens eine Schnittstelle zum Informationsaustausch aufweist, nämlich insbesondere mit einer externen Einheit wie einem Direktvermarkter oder Netzbetreiber. Die Ladeinfrastruktur ist dazu vorbereitet, zumindest ein Verfahren gemäß einer der vorstehend beschriebenen Ausführungsformen auszuführen. Insbesondere kann dafür ein entsprechendes Programm in der Steuereinrichtung implementiert sein.

Nachfolgend wird die Erfindung exemplarisch anhand von Ausführungsformen unter Bezugnahme auf die begleitenden Figuren näher beschrieben.
- Fig. 1: zeigt ein Ablaufschema zum veranschaulichen des vorgeschlagenen Verfahrens.
- Fig. 2: zeigt einen Ausschnitt des Ablaufschemas der Figur 1 zur Veranschaulichung eines Flexibilitätsbereichs.
- Fig. 3: zeigt einen Fuhrpark mit Ladeinfrastruktur schematisch.
- Fig. 4: zeigt in einem schematischen Diagramm einen Gesamtladezustandsverlauf zusammen mit zugehörigen Einzelladezustandsverläufen.
- Fig. 5: veranschaulicht einen Vorgabeleistungsraum.
- Fig. 6: zeigt mehrere Diagramme zur Veranschaulichung einer Leistungsverteilvorschrift.

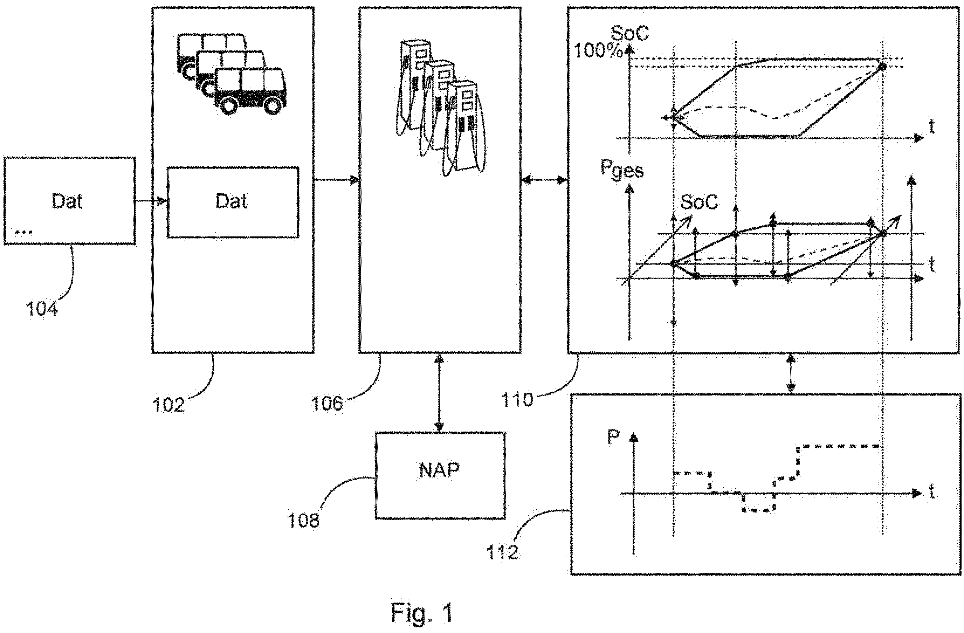

Das Ablaufschema der Figur 1 soll den grundsätzlichen Ablauf des vorgeschlagenen Verfahrens erläutern. Ein Gedanke bei dem Verfahren ist es, Speicherkapazitäten eines Fuhrparks mit Elektrofahrzeugen auszunutzen, um damit bedarfsabhängig Leistung vorübergehend einem elektrischen Versorgungsnetz zur Verfügung zu stellen und auch das Entnehmen elektrischer Leistung aus dem Versorgungsnetz zum Laden der Speicher der Elektrofahrzeuge des Fuhrparks unter Berücksichtigung des elektrischen Versorgungsnetzes gezielt zu steuern. Mit dem Verfahren kann auch eine Strompreisoptimierung erreicht werden. Der Fuhrpark kann also so gesteuert werden, dass er den benötigten Ladestrom möglichst günstig bezieht und dabei die technischen Randbedingungen einhält. Besonders wurde erkannt, dass es dafür auf eine gute Planung der technischen Ressourcen ankommt, und die kann durch das vorgeschlagene Verfahren erreicht werden.

Der Fuhrpark der Elektrofahrzeuge wird durch den Fuhrparkblock 102 repräsentiert. Der Fuhrparkblock beinhaltet dabei Informationen zu den Elektrofahrzeugen.

Darüber hinaus ist ein Eingangsdatenblock 104 veranschaulichend dargestellt. Dieser Eingangsdatenblock 104 beinhaltet besonders Informationen bzw. Daten, die stark veränderlich sind, insbesondere solche, die sich täglich ändern können und/oder täglich aktualisiert werden können. Dazu gehört ein Fahrplan für die Elektrofahrzeuge, wenn ein solcher vorhanden ist, der als Busfahrplan vorhanden sein kann, wenn die Elektrofahrzeuge des Fuhrparks Elektrobusse sind.

Die Prognose oder Vorhersage kann von dem Fuhrparkblock 102 erstellt und an eine Ladeinfrastruktur des Fuhrparks gegeben werden. Diese Ladeinfrastruktur wird durch den Infrastrukturblock 106 repräsentiert. Der Infrastrukturblock 106 kann dabei Informationen zur Ladeinfrastruktur enthalten, nämlich insbesondere eine maximale Ladeleistung, die durch entsprechende Ladeterminals vorgegeben sein kann. Diese Ladeterminals sind ebenfalls Teil der Ladeinfrastruktur.

Außerdem ist ein Netzanschlussblock 108 vorgesehen, der besonders Informationen über das elektrische Versorgungsnetz und über verwendete Netzanschlusspunkte zur Verfügung stellen kann. Die Netzanschlusspunkte sind diejenigen, über die die Ladeterminals letztlich mit dem elektrischen Versorgungsnetz verbunden sind. Dabei kann die Ladeinfrastruktur über einen oder mehrere Netzanschlusspunkte mit dem elektrischen Versorgungsnetz verbunden sein.

Eine Ladesteuereinheit, die als Aggregator bezeichnet werden kann, und in dem Infrastrukturblock 106 enthalten sein kann, kann einen Flexibilitätsbereich oder Vorgabebereich erstellen. Das wird in dem Aggregationsblock 110 veranschaulicht.

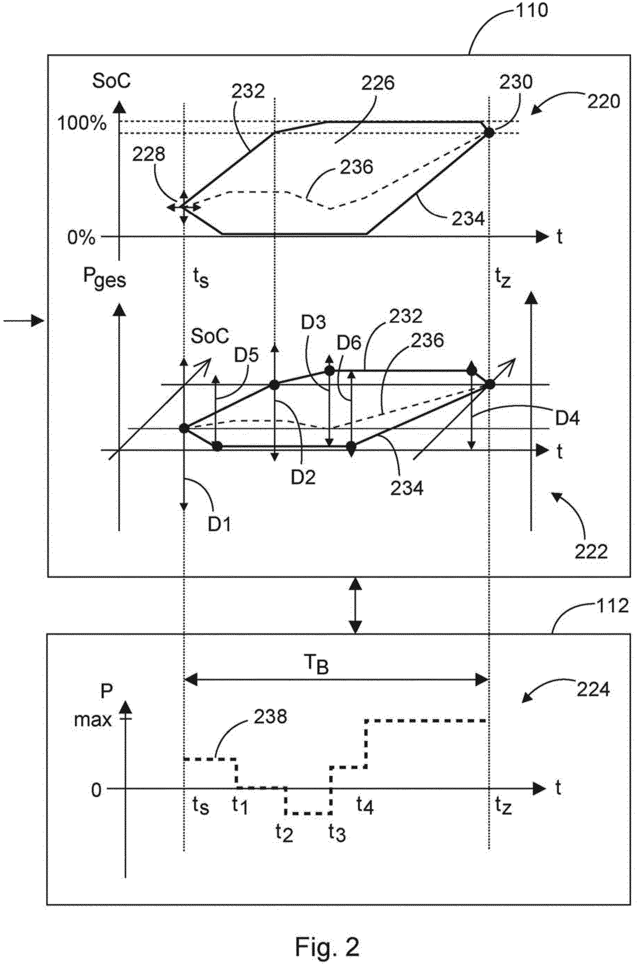

Weitere Details dazu sowie auch zu dem unteren Diagramm des Aggregationsblocks und auch zu dem unter dem Aggregationsblock 110 dargestellten Austauschleistungsblock 112 werden weiter unten zusammen mit der Figur 2 näher erläutert.

Der Austauschleistungsblock 112 gibt jedenfalls einen Austauschleistungsverlauf vor.

Figur 2 zeigt einen Ausschnitt des Ablaufschemas der Figur 1, nämlich den Aggregationsblock 110 und den Austauschleistungsblock 112. Der Aggregationsblock 110 weist im oberen Bereich ein Ladezustandsdiagramm 220 auf, das einen Flexibilitätsbereich illustriert. Im unteren Bereich des Aggregationsblocks 110 ist ein Variationsdiagramm 222 dargestellt, das auf dem Ladezustandsdiagramm 220 aufbaut und zusätzlich exemplarisch ein paar Variationsmöglichkeiten für Austauschleistung andeutet.

Im Austauschleistungsblock 112 ist ein Austauschleistungsdiagramm 224 dargestellt, das einen möglichen Verlauf einer Austauschleistung über die Zeit veranschaulicht also einen Austauschleistungsverlauf. Alle diese drei Diagramme, nämlich das Ladezustandsdiagramm 220, das Variationsdiagramm 222 und das Austauschleistungsdiagramm 224 weisen dieselbe Zeitachse auf. Besonders ist zur Veranschaulichung ein Startladezeitpunkt t_{S} und ein Zielladezeitpunkt tz für den Ladezustandsbereich eingezeichnet und diese Zeitpunkte auch durch entsprechende senkrechte Linien in den übrigen beiden Diagrammen eingezeichnet. Der Startladezeitpunkt t_{S} und der Zielladezeitpunkt t_{Z} spannen somit einen Bereitstellungszeitraum T_{B} auf, der der besseren Übersichtlichkeit halber nur im Austauschleistungsblock 112 eingezeichnet ist und dem Steuerzeitraum entspricht bzw. einen Steuerzeitraum bildet.

In dem Ladezustandsdiagramm 220 ist grundsätzlich der Summenladezustand SoC über die Zeit t aufgetragen, der auch als Gesamtladezustand bezeichnet werden kann. In diesem Diagramm ist der Flexibilitätsbereich 226 dargestellt. Er beginnt mit einem Startladepunkt 228 und endet mit einem Zielladepunkt 230. Der Startladepunkt 228 ist gekennzeichnet durch einen Wert des Gesamtladezustands SoC und den Startladezeitpunkt t_{S}. Sowohl die Höhe des Summenladezustands als auch der Startladezeitpunkt t_{S} können variieren und werden bevorzugt durch eine Vorhersage bestimmt.

Von dem Startladepunkt 228 verläuft dann der Gesamtladezustand SoC zum Zielladepunkt 230. Der Zielladepunkt 230 ist durch den Zielladezeitpunkt tz gekennzeichnet und durch den zugehörigen Wert des Gesamtladezustands SoC.

Während der Startladezeitpunkt t_{S} variabel ist und davon abhängt, wann die Elektrofahrzeuge tatsächlich zurück zum Fuhrpark gekommen sind, kann der Zielladezeitpunkt tz recht genau festgelegt sein, nämlich dann, wenn die Elektrofahrzeuge planmäßig losfahren.

Der Flexibilitätsbereich 226 weist eine zeitabhängige Obergrenze 232 und eine zeitabhängige Untergrenze 234 auf. Die zeitabhängige Obergrenze 232 kann zeitweise den Wert von 100 % erreichen. Dann wären alle Elektrospeicher komplett vollgeladen. Außerdem kann die Untergrenze 234 zumindest zeitweise den unteren Wert von 0 % erreichen. Dies dient allerdings der Veranschaulichung und häufig ist es nicht ratsam, alle Speicher komplett zu entladen, weil sie dadurch Schaden nehmen können. Somit kann als Minimalwert der Untergrenze 234 auch ein anderer Wert als 0 % gewählt werden, beispielsweise 20 %. Gleiches gilt für die Obergrenze 232, für die ein Maximalwert beispielsweise statt bei 100 % bei 90 % gewählt werden kann. Dieser Minimalwert und dieser Maximalwert können auch in Abhängigkeit von entsprechenden Werten der einzelnen elektrischen Speicher gewählt werden.

Das Ladezustandsdiagramm 220 veranschaulicht somit, dass durch die Obergrenze 232 und die Untergrenze 234 ein Flexibilitätsbereich 226 aufgespannt wird, in dem sich der Gesamtladezustand bewegen kann. Dazu ist beispielhaft ein Gesamtladezustandsverlauf 236 eingezeichnet. Der Der Gesamtladezustand kann synonym als Summenladezustand bezeichnet werden.

Das Variationsdiagramm 222 beinhaltet das Ladezustandsdiagramm 220, wobei die Koordinatenachse für den Gesamtladezustand SoC in die Zeichenebene hineinweist. Die Zeitachse ist geblieben und es ist eine Koordinatenachse für die Leistung P hinzugekommen. Diese Leistung P zeigt in dem Variationsdiagramm 222 an, bei welchem Eckpunkt der Obergrenze 232 bzw. Untergrenze 234 wie viel Austauschleistung abgegeben bzw. aufgenommen werden kann. Dazu sind die Doppelpfeile D1 - D6 eingezeichnet.

Die Doppelpfeile D1 - D6 zeigen Möglichkeiten an und helfen, einen Rahmen zu definieren, in dem die Austauschleistung dann tatsächlich variiert werden kann.

Es ist nun beispielhaft ein Verlauf einer Austauschleistung, also ein Austauschleistungsverlauf 238 in dem Austauschleistungsdiagramm 224 des Austauschleistungsblocks 112 dargestellt. Demnach beginnt zum Startladezeitpunkt t_{S} die Austauschleistung und damit der Austauschleistungsverlauf 238 mit einem positiven Wert. Es wird also Leistung aus dem elektrischen Versorgungsnetz entnommen und zum Laden der Speicher verwendet. Entsprechend steigt der Gesamtladezustand bzw. der Gesamtladezustandsverlauf 236 an. Das ist sowohl in dem Ladezustandsdiagramm 220 als auch dem Variationsdiagramm 222 zu erkennen. Zum Zeitpunkt t₁ fällt der Austauschleistungsverlauf 238 auf null ab und entsprechend weist der Gesamtladezustandsverlauf 236 einen waagerechten Bereich auf.

Zum Zeitpunkt t₂ ist geplant worden, also vorhergesagt worden, und wird dann noch umgesetzt, Leistung in das elektrische Versorgungsnetz einzuspeisen, weil hierein besonders hoher Bedarf vorhergesagt wurde, der sich auch daraus ergeben kann, dass des nachts, wenn eigentlich wenig Leistung benötigt wird, ein großer Erzeuger abgeschaltet wird, sodass dennoch ein Leistungsbedarf im elektrischen Versorgungsnetz entstehen kann.

Diese negative Austauschleistung ab dem Zeitpunkt t₂ ist auch in dem Gesamtladezustandsverlauf 236 durch eine abfallende Flanke zu erkennen.

Zum Zeitpunkt t₃ wird die Austauschleistung wieder auf einen positiven Wert geändert und entsprechend steigt der Gesamtladezustand wieder an. Zum Zeitpunkt t₄ wird die Austauschleistung nochmals erhöht, sodass der Gesamtladezustandsverlauf 236 ab t₄ auch noch etwas steiler verläuft. Auf diese Weise werden dann schließlich alle Speicher voll geladen, wodurch der Gesamtladezustandsverlauf 236 den Zielladepunkt 230 erreicht.

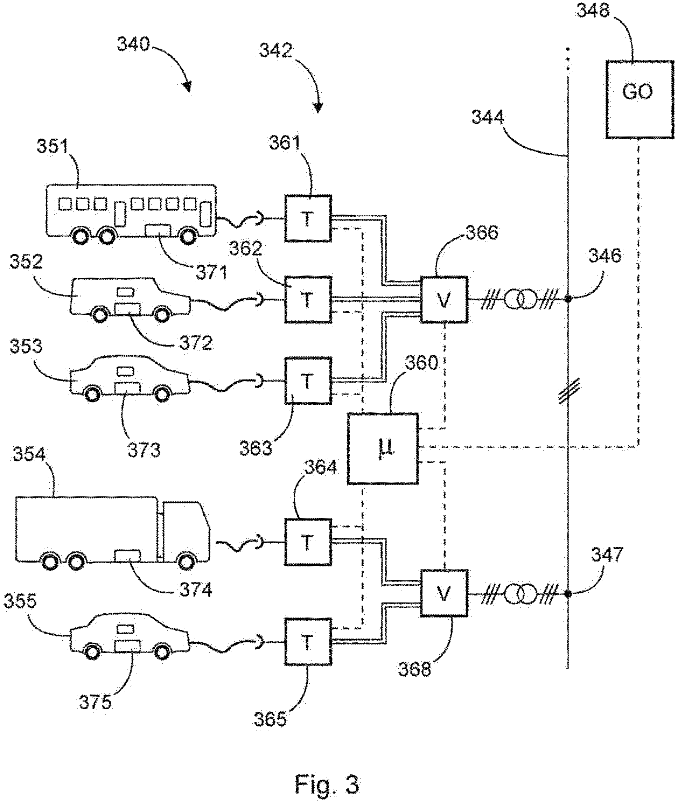

Figur 3 zeigt einen Fuhrpark 340 mit einer Ladeinfrastruktur 342, die an ein elektrisches Versorgungsnetz 344 über zwei Netzanschlusspunkte 346 und 347 angeschlossen ist. Das elektrische Versorgungsnetz verfügt über eine Netzsteuereinheit 348, die das elektrische Versorgungnetz 344 steuern kann. Die Netzsteuereinheit 348 kann auch durch einen Netzbetreiber betrieben werden.

Der Fuhrpark 340 weist exemplarisch fünf Elektrofahrzeuge 351 - 355 auf, die jeweils an eines der Ladeterminals 361 - 365 angeschlossen sind. Die Ladeterminals können über Verteilerknoten 366 bzw. 368 über jeweils einen Netzanschlusspunkt 346 bzw. 347 mit dem elektrischen Versorgungsnetz 344 verbunden sein.

Somit können die drei Elektrofahrzeuge 351 - 353 über den Netzanschlusspunkt 346 in das elektrische Versorgungsnetz 344 einspeisen bzw. daraus Leistung entnehmen und die Elektrofahrzeuge 354 und 355 über den Netzanschlusspunkt 347 Leistung in das elektrische Versorgungsnetz 344 einspeisen oder daraus entnehmen.

Gleichwohl ist eine Ladesteuereinheit 360 vorgesehen, die jedes einzelne Ladeterminal 361 - 365 und damit jeden Speicher der Elektrofahrzeuge 351 - 355 ansteuern kann. Außerdem ist als optionale Möglichkeit vorgesehen, dass die Ladesteuereinheit auch die Verteilerknoten 366 und 368 ansteuern kann. Außerdem ist vorgesehen, dass die Ladesteuereinheit 360 mit der Netzsteuereinheit 348 kommunizieren kann. Die Ladesteuereinheit 360 kann dazu Informationen an die Netzsteuereinheit 348 geben sowie Informationen von ihr erhalten. Die Ladesteuereinheit 360 kann auch als Steuereinheit der Ladeinfrastruktur bezeichnet werden, oder Teil einer Steuereinheit sein.

Grundsätzlich sind die Informationsverbindungen zwischen der Ladesteuereinheit 360 einerseits und den Ladeterminals 361 - 365, den Verteilerknoten 366 und 368 sowie der Netzsteuereinheit 348 gestrichelt dargestellt. Über die übrigen Leitungen, die durchgezogen gezeichnet sind, ist eine Leistungs- bzw. Energieübertragung möglich.

Die Ladesteuereinheit 360 kann Informationen über Eigenschaften der Ladeinfrastruktur 342 gespeichert haben und/oder als aktuelle Daten empfangen. Außerdem kann sie Informationen über Eigenschaften der elektrischen Speicher der Elektrofahrzeuge 351 - 355 gespeichert haben und, insbesondere über die Ladeterminals 361 - 365, aktuelle Informationen über den Ladezustand und gegebenenfalls weitere Eigenschaften der jeweiligen Speicher der Elektrofahrzeuge 351 - 355 erhalten und verarbeiten.

Damit kann mit der Ladesteuereinheit 360 insgesamt die Austauschleistung gesteuert werden, die zwischen der Ladeinfrastruktur 342 und dem elektrischen Versorgungsnetz 344 ausgetauscht wird. Diese Austauschleistung ist insoweit die Summe der Einzelaustauschleistungen bzw. Einzelleistungen der Leistungseinheiten, die über den Netzanschlusspunkt 346 und den Netzanschlusspunkt 347 mit dem elektrischen Versorgungsnetz 344 ausgetauscht werden.

In den Elektrofahrzeugen 351 - 355 sind zudem zum Zwecke der Veranschaulichung elektrische Speicher 371 - 375 angedeutet.

Elektrische Speicher können synonym auch als Elektrospeicher oder einfach Speicher bezeichnet werden.

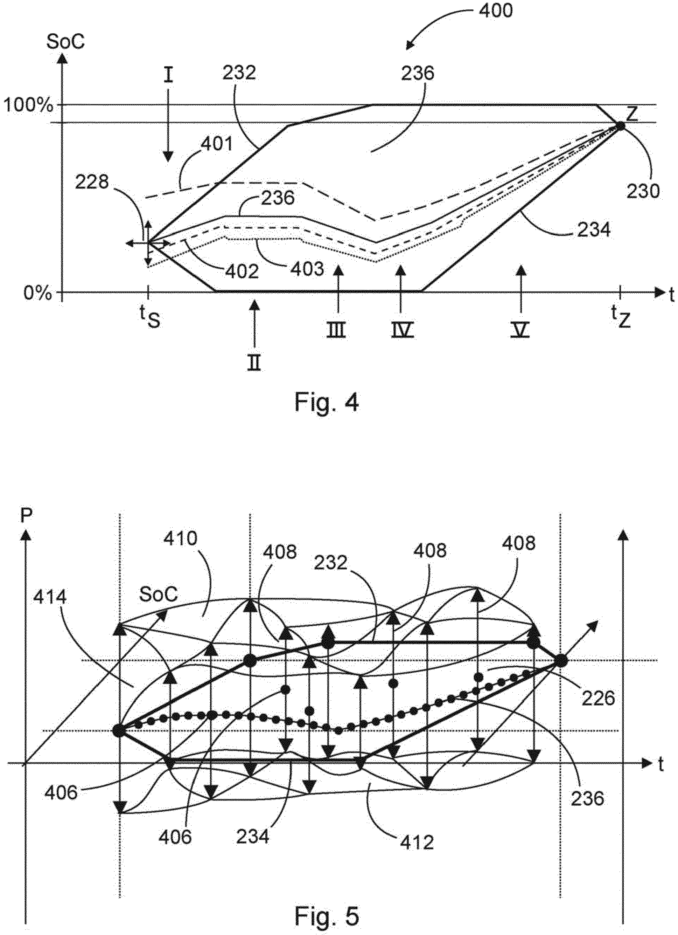

Figur 4 zeigt ein Ladezustandsdiagramm 400, das im Grunde den Ladezustandsdiagramm 220 der Figur 2 entspricht und insoweit sind auch die Bezugszeichen einiger Elemente übernommen worden. Zusätzlich zu dem Gesamtladezustandsverlauf 236 sind drei Einzelladezustandsverläufe 401 - 403 eingezeichnet. Die Summe dieser Einzelladezustandsverläufe ergibt somit den Gesamtladezustandsverlauf 236. Da die Ladezustände als Prozentwert angegeben sind, liegt dieser Gesamtladezustandsverlauf 236 zwischen den Einzelladezustandsverläufen 401 - 403. Die absoluten Werte des Gesamtladezustandsverlaufs 236 sind natürlich deutlich größer als die Absolutwerte der jeweiligen Einzelladezustandsverläufe.

Der Gesamtladezustandsverlauf 236 geht somit auch von den Austauschleistungsverlauf 238 der Figur 2 aus. Figur 4 ist dann ein Beispiel wie die Austauschleistung auf die einzelnen, hier also beispielhaft 3, Leistungseinheiten aufgeteilt werden kann.

In dem gezeigten Beispiel weist der erste Einzelladezustandsverlauf 401 zum Startladezeitpunkt t_{S} einen vergleichsweise hohen Wert auf, der nämlich über einen mittleren Ladezustand liegt. Bei der gewählten prozentualen Darstellung entspricht der Gesamtladezustandsverlauf 236 einen mittleren Ladezustandsverlauf.

Die beiden Einzelladezustandsverläufe 402 und 403 haben zum Startladezeitpunkt jeweils einen geringeren Einzelladezustand als der mittlere Ladezustand 236.

Die Aufteilung der Austauschleistung auf die 3 Elektrofahrzeuge, die diesen 3 Einzelladezustandsverläufen 401 - 403 zu Grunde liegen, wird hier so vorgeschlagen, dass die Einzelladezustandsverläufe 401 - 403 sich dem mittleren Ladezustandsverlauf annähern. Der Einzelladezustandsverlauf 401 hat somit zu Beginn eine geringere Steigung, als der mittlere Ladezustandsverlauf bzw. damit der Gesamtladezustandsverlauf 236. Der zweite und dritte Einzelladezustandsverlauf hat hingegen zu Beginn jeweils einen höheren Anstieg. Das ist im ersten Bereich I. zu erkennen. Im zweiten Bereich II. erfolgt kein Leistungsaustausch. Alle dargestellten Verläufe sind somit waagerecht. In folgendem dritten Abschnitt III. wird Leistung entnommen, sodass die Ladezustände abfallen. Hier wird die Austauschleistung so aufgeteilt, dass der erste Einzelladezustandsverlauf 401 stärker fällt, als der zweite und dritte Einzelladezustandsverlauf 402 und 403. Somit wird erreicht, dass auch beim Entladen die Einzelladezustände dem mittleren Ladezustand angenähert werden.

Im folgenden vierten Bereich IV. wird dann wieder Leistung geladen, und auch hier erfolgt die Leistungsaufteilung so, dass sich die Einzelladezustände dem mittleren Ladezustand annähern bzw. die Verläufe nähern sich an. Gleiches gilt für den fünften Bereich V., an dessen Ende schließlich die Einzelladezustandsverläufe den mittleren Ladezustandsverlauf am Zielladepunkt 230 am Zielladezeitpunkt t_{Z} sich treffen.

Somit kann besonders erreicht werden, dass auch der erste Einzelladezustandsverlauf 401, der mit einer sehr hohen Anfangsladung startet, nicht vorzeitig einen Sollladezustand erreicht. Damit kann auch der diesen ersten Einzelladezustandsverlauf 401 zugrundeliegende Speicher zum Leistungsaustausch über den gesamten Steuerzeitraum beitragen. Damit kann sehr lange ein großes Gesamtleistungsintervall aufrechterhalten bleiben.

Es wurde somit erkannt, dass nicht immer in einem Flexibilitätsraum 226, der auch als Ladezustandsbereich bezeichnet werden kann, beim möglichen Leistungsaustausch zu einem beliebigen Zeitpunkt und einem beliebigen Gesamtladezustand eine Gleichverteilung der Ladezustände der einzelnen Speicher, die auch als Batterien bezeichnet werden können, als Vereinfachung angenommen werden können. So hängt die mögliche Austauschleistung zu einem Zeitpunkt und einem Gesamtladezustand auch von dem aktuellen Einzelladezustand jeder einzelnen Batterie ab. Auch physikalische Eigenschaften der Einzelbatterien können in einem Aggregat nur gemittelt berücksichtigt werden und dadurch kann der mögliche Leistungsaustausch eventuell verfälscht werden.

Auch technische Eigenschaften einer Ladeinfrastruktur können die mögliche Austauschleistung beeinflussen. Dazu gehören z.B. Wandlerleistungen.

Andererseits wurde erkannt, dass die Vorgabe eines Flexibilitätsraumes mit Leistungsgrenzen, somit die Vorgabe eines Gesamtleistungsraums für eine Vermarktung nur erfolgen kann, wenn eine Vereinfachung der Gleichverteilung der Ladezustände in Bezug auf den Leistungsaustausch angenommen wird. Es wurde aber auch erkannt, dass unter Berücksichtigung der Leistungsverteilvorschrift der Verlauf der Einzelladezustände verfolgt werden kann und damit bekannt sein kann. Damit können die Einzelladezustände immer bestimmt werden, damit die Einzelleistungsintervalle und damit auch die Gesamtleistungsintervalle. Dadurch kann also für jeden Bereichspunkt in dem Flexibilitätsbereich das Gesamtleistungsintervall bestimmt werden.

Daher wurde erkannt, dass es wichtig sein kann, eine genaue Kenntnis des Verfahrens zur Leistungsaufteilung zu haben, also die Leistungsverteilvorschrift zu kennen. Dabei wurde auch erkannt, dass auch eine Möglichkeit sein kann, die Ladeleistung gewichtet in Abhängigkeit von einer Differenz jeweils eines Einzelladezustands vom zu erreichenden Ladezustand vorzugeben. Zusätzlich kann dies in Abhängigkeit von der Batteriegröße vorgegeben werden, jedenfalls wenn die jeweilige Ladeleistung nicht als prozentualer Wert, sondern als tatsächlicher Leistungswert vorgegeben wird. Hierbei ist zu berücksichtigen, dass eine Gesamtladeenergie, also eine angeforderte Austauschenergie vorgegeben wurde, um einen gewünschten Gesamtladezustand am Ende des Steuerzeitraums zu erhalten. Daraus kann ein Ladefahrplan berechnet werden, der nämlich die Verteilung der Austauschleistung auf die angeschlossenen Leistungseinheiten vorgibt.

Hier wurde erkannt, dass es vorteilhaft ist, wenn der Anteil der Einzelladeleistung der einzelnen Batterien proportional zum aktuellen Abstand des Einzelladezustands zum Zielladezustand ist. Für die Vorgabe absoluter Leistungswerte ist dann die Batteriegröße zusätzlich zu berücksichtigen und die Leistung kann dabei jeweils proportional zu ihr vorgegeben werden. Dadurch kann jeder Speicher bzw. jede Batterie genauso viel der zur Verfügung stehenden Austauschleistung zugeordnet werden, wie notwendig ist, um alle Batterien kontinuierlich auf den Zielladezustand zu bringen.

Zusätzlich sollte eine statische Maximalleistung einer Batterie zu jedem Arbeitspunkt als Begrenzung berücksichtigt werden. Führt eine Begrenzung einer Ladeleistung eines Systems jedoch dazu, dass dem Stromfahrplan also den Gesamtladezustandsverlauf, nicht gefolgt werden kann, so müsste der Sollwert der anderen Systeme angehoben werden. Die Leistung kann dann also anders verteilt werden.

Mit einem bekannten Verfahren der Leistungsaufteilung, also einer bekannten Leistungsverteilvorschrift, sind somit auch die einzelnen Ladezustandsverläufe bekannt. Diese können auch als Pfade innerhalb des Flexibilitätsraums bezeichnet werden, wie sie als Einzelladezustandsverläufe 401 - 403 in Figur 4 dargestellt sind. Damit können dann auch jeweils das Einzelleistungsintervall des entsprechenden Speichers und damit auch das Gesamtleistungsintervall aller Speicher zu jedem Bereichspunkt bestimmt werden.

Alternativ oder ergänzend ist es auch denkbar, die Einzelladeleistung jedes Speichers bzw. jeder Batterie in einer Anfangsphase so zu steuern, dass möglichst schnell ein einheitlicher Einzelladezustand erreicht wird. Dadurch kann erreicht werden, dass eine Berücksichtigung der Einzelladezustände bzw. der dazu erforderlichen Einzelleistung nur in einer Anfangsphase zum Erreichen eines einheitlichen Ladezustands notwendig wäre.

Sollte sich herausstellen, dass die angeforderte Energie zu hoch oder zu klein ist, um den Zielladezustand zu erreichen, kann zu günstigen Zeitpunkten eine Ausgleichsenergie bezogen oder eingespeist werden bzw. es kann dann ein entsprechender Bezug eingestellt werden. Durch die rechtzeitige Planung ist es somit möglich, hier trotzdem noch günstige Zeitpunkte für das Beschaffen dieser Ausgleichsenergie auszuwählen.

Auch für einzelne Systeme, also einzelne Speicher, sollte jederzeit überprüft werden, ob der Zielladezustand noch erreicht werden kann. Grade bei niedrigen Ladezuständen kann es sein, dass der nötige Gradient, also die nötige Ladeleistung, für ein einzelnes System zu groß wird.

Figur 5 baut auf dem Variationsdiagram 222 und damit auch auf den Ladezustandsdiagramm 220 der Figur 2 auf. Die Bezugszeichen sind soweit relevant übernommen worden. Insoweit enthält das Diagramm der Figur 5 den Flexibilitätsbereich 226, dessen Obergrenze 232 und Untergrenze 234 in der Darstellung mit dickerer Linie dargestellt sind. In dem Flexibilitätsbereich 226 ist der Gesamtladezustandsverlauf 236, der im Übrigen auch in Figur 4 gezeigt ist, in Figur 5 durch zusätzliche Punkte hervorgehoben. Dies hat somit darstellerische Gründe, die Punkte deuten zudem aber auch an, dass jeder Punkt auf dem Gesamtladezustandsverlauf ein Bereichspunkt des Flexibilitätsbereichs ist. Der besseren Übersichtlichkeitshalber sind diese Bereichspunkte 406 nur teilweise mit Bezugszeichen versehen.

Zu jedem eingezeichneten Bereichspunkt 406, also auch solche die kein Bezugszeichen tragen, ist jeweils ein Doppelpfeil dargestellt, der jeweils ein Gesamtleistungsintervall 408 symbolisiert. Die Gesamtleistungsintervalle 408 können unterschiedlich groß sein, tragen der Einfachheit halber aber dasselbe Bezugszeichen. Ein Bereichspunkt 406 liegt somit in der Ebene des Flexibilitätsbereichs 226 und das kann auf dem Gesamtladezustandsverlauf 236 sein, oder an einer anderen Stelle im Flexibilitätsbereich 226. Jedes Gesamtleistungsintervall 408 markiert somit durch den Pfeil nach oben eine Obergrenze für die Austauschleistung und mit dem Pfeil nach unten eine Untergrenze für die Austauschleistung des jeweiligen Bereichspunktes. Diese Gesamtleistungsintervalle bzw. die jeweiligen Leistungsgrenzen sind somit als dritte Dimension in das Diagramm der Figur 5 eingetragen. Alle Obergrenzen der Gesamtleistungsintervalle 408 zusammen spannen eine Fläche auf, die oben schon als Gewölbe veranschaulichend bezeichnet wurde.

All diese Obergrenzen zusammen bilden somit zusammen eine obere Leistungsfläche 410. Durch eine Verbindung der Obergrenzen der dargestellten Gesamtleistungsintervalle 408 soll diese obere Leistungsfläche 410 angedeutet werden.

Entsprechend gibt es für die unteren Leistungsgrenzen der Gesamtleistungsintervalle 408 eine untere Leistungsfläche 412. Auch sie soll veranschaulicht werden durch Verbindungslinien zwischen unteren Leistungswerten der eingezeichneten Gesamtleistungsintervalle 408.

Somit ergibt sich zwischen der oberen Leistungsfläche 410 und der unteren Leistungsfläche 412 ein Vorgabeleistungsraum 414. Ein Gesamtleistungsraum ist ganz ähnlich zum Vorgabeleistungsraum aufgebaut, sie sind grundsätzlich gleich, aber mit dem Unterschied, dass dem Vorgabeleistungsraum Gesamtleistungsintervalle mit speziellen Annahmen zugrunde liegen, Nämlich das ungünstige Voraussetzungen zugrunde liegen.

Besonders kann ein solcher Vorgabeleistungsraum 414 dazu bereitgestellt werden, einen Austauschleistungsverlauf 238 zu bestimmen. Ein solcher Austauschleistungsverlauf 238 ist in Figur 2 unten gezeigt und seine Leistungswerte müssen in den Vorgabeleistungsraum 414 bleiben. Basierend auf der Figur 5 würde das grafisch bedeuten, dass entlang des Gesamtladezustandsverlaufs 236, nämlich mit der Zeit als Basis, der Leistungsverlauf 238 der Figur 2 aufgetragen würde. Solange dann dieser Austauschleistungsverlauf 238 weder die obere Leistungsfläche 410 überschreitet noch die untere Leistungsfläche 412 unterschreitet, liegt ein zulässiger Austauschleistungsverlauf 238 vor. Mit anderen Worten kann dieser Vorgabeleistungsraum 414 dazu verwendet werden, einen Austauschleistungsverlauf 238 so vorzugeben, dass er in diesen Vorgabeleistungsraum 414 liegt.

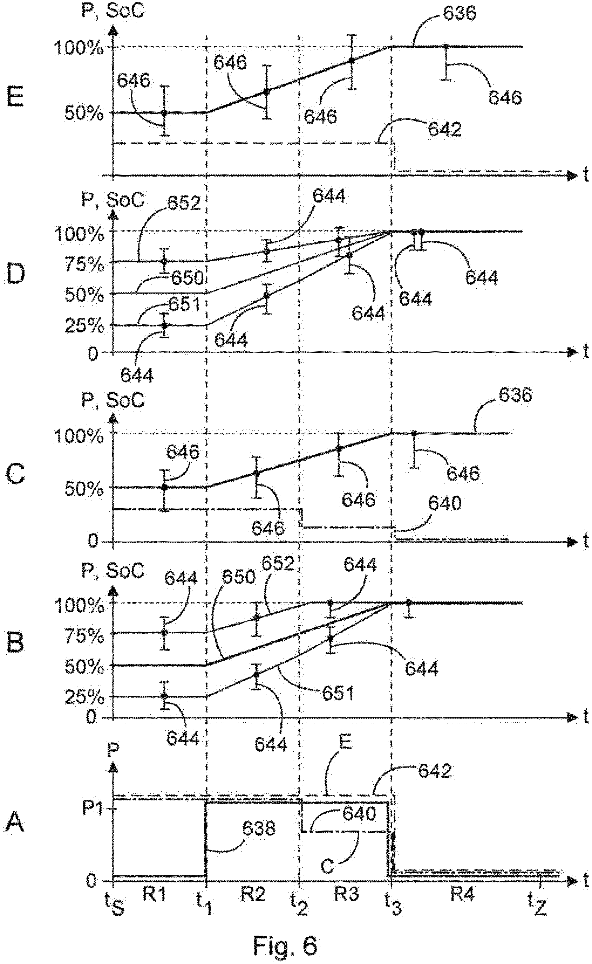

Die Figur 6 zeigt Diagramme zum veranschaulichen einer Leistungsverteilvorschrift. Dafür sind diese fünf Diagramme A - E vorgesehen, die die selbe Zeitbasis haben.

Gemäß dem unteren Diagramm A wird ein Austauschleistungsverlauf 638 vorgegeben. Hier wird zum Zwecke der Veranschaulichung ein sehr einfacher Verlauf angenommen, bei dem nämlich die Austauschleistung zum Zeitpunkt t1 auf den Wert P1 ansteigt und diesen Wert kontinuierlich hält und beim Zeitpunkt t3 auf 0 abfällt. Der Flächeninhalt des sich so ergebenden Rechtecks des Austauschleistungsverlauf 638 entspricht somit einer angeforderten Austauschenergie, die durch diese Austauschleistung gemäß des Austauschleistungsverlaufs 638 bereitgestellt werden soll.

Zusätzlich enthält das Diagramm A noch zwei mögliche Leistungsgrenzen 640 und 642, die sich aus dem Diagramm C bzw. E ergeben, wie unten noch erläutert wird.

Es wird nun davon ausgegangen, dass lediglich zwei Elektrospeicher, also zwei Elektrofahrzeuge vorhanden sind und denen kann ein erster Einzelleistungsverlauf 651 und ein zweiter Einzelleistungsverlauf 652 zugeordnet werden. Diese haben einen Einzelladezustand von 25 % bzw. von 75 %. Diese beiden Einzelladezustände liegen dabei allen Diagrammen zugrunde und sind insbesondere in den Diagrammen B und D entsprechend dargestellt.

Im Diagramm B wird nun davon ausgegangen, dass eine Leistungsverteilvorschrift vorliegt, die die Austauschleistung zu jeweils gleichen Teilen an beide Leistungseinheiten aufteilt. Beide Einzelleistungsverläufe 651 und 652 verlaufen somit zunächst waagerecht, bis zum Zeitpunkt t₁ geladen wird und sie gleich viel Leistung zum Laden erhalten. Damit steigen beide Einzelleistungsverläufe 651 und 652 mit gleicher Steigung, damit parallel zueinander an. Ebenfalls ist ein mittlerer Ladezustandsverlauf 650 gezeigt. Aufgrund der prozentualen Darstellung entspricht der mittlere Ladezustandsverlauf 650 einen Gesamtladezustandsverlauf.

Dieser mittlere Ladezustandsverlauf und damit der Gesamtladezustandsverlauf steigt somit aufgrund der konstanten Austauschleistung linear an, nämlich vom Zeitpunkt t₁ bis zum Zeitpunkt t₃. Zum Zeitpunkt t₂ erreicht aber zweite Einzelladezustandsverlauf 652 den Wert von 100 %. Der entsprechende Speicher ist dann also vollgeladen. Entsprechend muss der verbleibende Speicher doppelt so schnell geladen werden, was durch die größere Steilheit des ersten Einzelladezustandsverlauf 651 angedeutet ist.

Zusätzlich sind Einzelleistungsintervalle 644 eingezeichnet. Der Einfachheit halber wird auch für unterschiedliche Teilleistungsintervalle dasselbe Bezugszeichen 644 verwendet. In dem ersten Bereich R1 zwischen der Startzeit tₛ und der Zeit t1 weisen diese Teilleistungsintervalle 644 Maximalwerte auf. Gleiches gilt in dem zweiten Bereich R2, der zwischen t₁ und t₂ liegt. Ab t₂, also im Bereich R3 hat der zweite Teilleistungsverlauf 652 aber bereits seinen Maximalwert erreicht, der Speicher ist also voll, und damit ist dort sein Teilleistungsintervall 644 verringert, lässt nur noch eine Entladeleistung, aber keine Ladeleistung mehr. Deswegen muss dann die gesamte Austauschleistung von dem verbleibenden Speicher aufgenommen werden.

Der erste Einzelladezustandsverlauf 651 wird somit steiler. Die Summe der Teilleistungsintervalle 644 ergibt jeweils ein Gesamtleistungsintervall 646. Dazu ist in dem Diagramm C ein Gesamtladezustandsverlauf 636 mit den resultierenden Gesamtleistungsintervallen 646 eingezeichnet. Die Gesamtleistungsintervalle 646 sind somit sowohl in dem ersten Bereich R1, sowie in dem zweiten Bereich R2 noch groß. Zum Zeitpunkt t₂ fällt aber der positive Teil des Teilleistungsintervall 644 des zweiten Einzelladezustandsverlauf 652 weg. Somit ist das Gesamtleistungsintervall 646 im dritten Bereich R3 entsprechend kleiner. Im vierten Bereich R4 also zwischen t₃ und t_{Z} sind beide Speicher geladen und es gibt keinen positiven Anteil mehr an dem Gesamtleistungsintervall.

Um nun nur die obere Leistungsgrenze zu veranschaulichen, da hier nur das Laden betrachtet wird, ist in dem Diagramm C ein entsprechender Leistungsverlauf als Leistungsgrenze 640 strichpunktiert eingezeichnet. Diese Leistungsgrenze 640 fällt somit bei t₂ auf ihren halben Wert ab und bei t₃ auf 0. Diese Leistungsgrenze 640 ist aber diejenige, die die Austauschleistung einhalten muss. Entsprechend ist, etwas anders skaliert, diese Leistungsgrenze 640 des Diagramms C in dem Diagramm A eingezeichnet. Es ergibt sich, dass in dem dritten Bereich R3 tatsächlich der Austauschleistungsverlauf 638 oberhalb der Leistungsgrenze 640 liegt. Damit ist diese Leistungsbegrenzung verletzt und der geschilderte Verlauf wäre nicht möglich oder zumindest nicht wünschenswert.

Das Diagramm D zeigt dazu eine alternative Variante, nämlich eine andere Leistungsverteilvorschrift. Der besseren Übersichtlichkeit halber werden dieselben Bezugszeichen wie im Diagramm B verwendet. Es soll dieselbe Austauschleistung auf die beiden Speicher verteilt werden, die in Diagramm A als Austauschleistungsverlauf 638 dargestellt ist. Auch dieselben Startbedingungen liegen vor. Zum Zeitpunkt t₁ ist dann die Austauschleistung auf die beiden Speicher zu verteilen.

Dafür wird nun aber vorgesehen, die Austauschleistung so zu verteilen, dass die Einzelladungszustandsverläufe, also der erste und zweite Einzelladezustandsverlauf 651 und 652 sich den mittleren Ladezustandsverlauf angleichen. In dem Bereich R2 hat somit der zweite Einzelladezustandsverlauf eine schwächere Steigung als der erste Einzelladezustandsverlauf 651. Das führt dazu, dass der zweite Einzelladezustandsverlauf 652 zum Zeitpunkt t₂, anders als im Diagramm B noch nicht seine Grenze erreicht. Es sind zum Zeitpunkt t₂ und damit auch im Anschluss in dem dritten Bereich R3 noch immer nicht beide Speicher geladen. Damit sind auch die Teilleistungsintervalle 644 im dritten Bereich R3 immer noch für den ersten Einzelladezustandsverlauf 651 und den zweiten Einzelladezustandsverlauf 652 gleich groß.

Erst im Zeitpunkt t₃ und dann weiter im vierten Bereich R4 kann keine Leistung mehr aufgenommen werden, beide Teilleistungsintervalle 644, die im Diagramm D im vierten Bereich R4 nebeneinander dargestellt sind verlieren ihren positiven Bereich. Beide Speicher sind nun voll geladen.

Auch für diese Verteilvorschrift zeigt das Diagramm E einen Gesamtladezustandsverlauf 236 mit zugeordneten Gesamtleistungsintervallen 646. Der Gesamtladezustandsverlauf 236 ist natürlich in dem Diagramm E und C gleich. Aber es ergibt sich ein Unterschied in den Gesamtleistungsintervall 646 im dritten Bereich R3. Der ist nämlich bei der Variante der Diagramme D und E noch nicht eingeschränkt. Auch im Diagramm E ist zur Veranschaulichung eine Leistungsgrenze 642 als gestrichelte Linie eingezeichnet, die somit in dem Bereich R3 nicht abfällt, sondern erst nach dem Zeitpunkt t3 und damit im Bereich R4. Die Leistungsgrenze konnte also gehalten werden.

Diese Leistungsgrenze 642 der zweiten Variante der Leistungsverteilvorschrift ist ebenfalls in dem Diagramm A eingezeichnet (auch hier wieder größer skaliert als in dem Diagramm E) und es ist erkennbar, dass nun der Austauschleistungsverlauf 638 vollständig unterhalb dieser Leistungsgrenze 642 des Diagramms E bleibt. Die Leistungsgrenze wird hier also nicht verletzt.

Somit ist zu erkennen, dass allein eine unterschiedliche Art der Leistungsaufteilung dazu führen kann, ob durch die Austauschleistung eine Leistungsgrenze verletzt wird oder nicht. Das resultiert dadurch, dass unterschiedliche einzelne Ladezustandsverläufe 651, 652 zwar zu demselben Gesamtladezustandsverlauf führen, aber unterschiedliche Gesamtleistungsintervalle 646 nach sich ziehen können. Die geschickte Leistungsaufteilung gemäß einer entsprechend vorgeschlagenen Leistungsverteilungsvorschrift verbessert somit den möglichen Leistungsbereich für einen Austauschleistungsverlauf. Zudem kann diese Leistungsverteilvorschrift bei der Planung, insbesondere auch bei der Vorgabe eines Vorgabeleistungsraums berücksichtigt werden. Bei einer entsprechend guten Leistungsverteilvorschrift ergibt sich somit ein entsprechend größerer Vorgabeleistungsraum.

## Patentansprüche

1. Verfahren zum Steuern einer Austauschleistung zwischen einer Ladeinfrastruktur und einem elektrischen Versorgungsnetz, wobei
- mehrere Leistungseinheiten zum Abgeben oder Aufnehmen elektrischer Leistung an die Ladeinfrastruktur anschließbar sind, um elektrische Leistung zwischen den Leistungseinheiten und dem elektrischen Versorgungsnetz über die Ladeinfrastruktur auszutauschen, und
- mehrere der Leistungseinheiten jeweils als Elektrofahrzeug (351-355) ausgebildet sind, sodass mehrere Elektrofahrzeuge jeweils an die Ladeinfrastruktur anschließbar sind, um elektrische Leistung zwischen den Elektrofahrzeugen und dem elektrischen Versorgungsnetz über die Ladeinfrastruktur auszutauschen und die Elektrofahrzeuge dadurch zu laden oder zu entladen,
- jede Leistungseinheit einen veränderlichen Ladezustand aufweist, der jeweils als Einzelladezustand berücksichtigt werden kann, wenn die Leistungseinheit an die Ladeinfrastruktur angeschlossen ist,
- aus den Einzelladezuständen der Leistungseinheiten, ein Gesamtladezustand bestimmbar ist,
- für den Gesamtladezustand ein Flexibilitätsbereich für einen Steuerzeitraum vorgebbar ist, der in Abhängigkeit von der Zeit einen Bereich aufspannt, in dem der Gesamtladezustand auftreten darf, wobei der Flexibilitätsbereich
- durch einen zeitlichen Verlauf einer Obergrenze des Gesamtladezustands und einen zeitlichen Verlauf einer Untergrenze des Gesamtladezustands für den Steuerzeitraum aufgespannt wird, und
- der Flexibilitätsbereich Bereichspunkte aufweist, die jeweils durch einen Wert des Gesamtladezustands und einen Zeitpunkt in dem Steuerzeitraum definierbar sind,
- einem Bereichspunkt jeweils ein Gesamtleistungsintervall zugeordnet wird, das zu dem Zeitpunkt und zu der Gesamtleistung des Bereichspunktes einen einzuhaltenden Bereich für eine zwischen der Ladeinfrastruktur und dem elektrischen Versorgungsnetz auszutauschende Gesamtaustauschleistung vorgibt, und
- die Gesamtleistungsintervalle aller Bereichspunkte einen für die Gesamtaustauschleistung einzuhaltenden Gesamtleistungsraum über den Flexibilitätsbereich aufspannen wobei
- das Gesamtleistungsintervall eines Bereichspunktes von den Einzelladezuständen der Leistungseinheiten abhängt, die dem Gesamtladezustand des Bereichspunktes zugrunde liegen.

2. Verfahren nach Anspruch 1, **dadurch gekennzeichnet, dass**
- einem Einzelladezustand einer Leistungseinheit jeweils ein Einzelleistungsintervall zugeordnet wird, das für diesen Einzelladezustand einen einzuhaltenden Bereich für die Einzelaustauschleistung vorgibt, die die Leistungseinheit mit der Ladeinfrastruktur austauschen kann, , und
- das Gesamtleistungsintervall eines Bereichspunktes jeweils in Abhängigkeit von erfassten, berechneten und/oder vorhergesagten Einzelladezuständen des Bereichspunktes und ihren zugeordneten Einzelleistungsintervallen erstellt wird, wobei insbesondere
- das Gesamtleistungsintervall im Wesentlichen einer Summe der Einzelleistungsintervalle entspricht.

3. Verfahren nach Anspruch 1 oder 2, **dadurch gekennzeichnet, dass**
- für die Bestimmung jedes Gesamtleistungsintervalls jeweils eine positive und eine negative Gesamtleistungsgrenze bestimmt wird, um jeweils eine Asymmetrie des Gesamtleistungsintervalls zu berücksichtigen, wobei
- die positive Gesamtleistungsgrenze die Leistung begrenzt, die die Ladeinfrastruktur maximal aufnehmen kann, und
- die negative Gesamtleistungsgrenze die Leistung begrenzt, die die Ladeinfrastruktur maximal abgeben kann, wobei insbesondere
- berücksichtigt wird, dass den Einzelleistungsintervallen jeweils eine positive und eine negative Einzelleistungsgrenze zugeordnet sein kann.

4. Verfahren nach einem der vorstehenden Ansprüche, **dadurch gekennzeichnet, dass**
- das jeweilige Gesamtleistungsintervall jeweils
- in Abhängigkeit von einem erfassten oder vorhergesagten Anfangsgesamtladezustand bestimmt wird, der dem Gesamtladezustand zu Beginn des Steuerzeitraumes entspricht, und/oder
- in Abhängigkeit von erfassten oder vorhergesagten Anfangseinzelladezuständen bestimmt wird, die die Einzelladezustände zu Beginn des Steuerzeitraumes bezeichnen, und
- in Abhängigkeit von einer Leistungsverteilvorschrift bestimmt wird, die vorgibt, wie eine Gesamtaustauschleistung auf die einzelnen Leistungseinheiten aufgeteilt wird.

5. Verfahren nach einem der vorstehenden Ansprüche, **dadurch gekennzeichnet, dass**
- zum Vorgeben eines Austauschleistungsverlaufs ein Vorgabebereich bestimmt wird, wobei
- der Vorgabebereich dem Flexibilitätsbereich entspricht oder einen Teil davon bildet, und
- der Vorgabebereich mehrere Bereichspunkte aufweist, denen jeweils ein Gesamtladezustand mit einem Vorgabeleistungsintervall zugeordnet ist, wobei
- die Vorgabeleistungsintervalle einen zulässigen Vorgabeleistungsraum über den Vorgabebereich aufspannen, in dem der Austauschleistungsverlauf liegen soll,
- jedes Vorgabeleistungsintervall ein Gesamtleistungsintervall bildet, wobei
- die Vorgabeleistungsintervalle jeweils, zumindest einige davon,
- in Abhängigkeit von einer ungünstigen Konstellation aller Einzelladezustände des Bereichspunktes bestimmt werden und/oder
- in Abhängigkeit von einem ungünstigen Austauschleistungsverlauf bestimmt wird,
wobei insbesondere
- jedes Vorgabeleistungsintervall ein vorhergesagtes Gesamtleistungsintervall bildet, das in Abhängigkeit von
- einer Vorhersage eines Gesamtleistungsanfangszustands und/oder
- einer Vorhersage von Einzelladeanfangszuständen vorhergesagt wurde.

6. Verfahren nach einem der vorstehenden Ansprüche, **dadurch gekennzeichnet, dass**
- ein Austauschleistungsverlauf in Abhängigkeit von einem bzw. dem Vorhersagebereich so vorgegeben wird, dass der Austauschleistungsverlauf innerhalb des Vorgabeleistungsraumes liegt, und optional
- auf eine Anforderung geprüft wird, ob ein vorgeschlagener Austauschleistungsverlauf, der zumindest teilweise nicht innerhalb des Vorgabeleistungsraumes liegt, innerhalb des Gesamtleistungsraumes liegt.

7. Verfahren nach einem der vorstehenden Ansprüche, **dadurch gekennzeichnet, dass** für den Steuerzeitraum
- eine angeforderte Austauschenergie vorgegeben wird, die eine Energie angibt, die die Ladeinfrastruktur für den Steuerzeitraum zum Laden der Leistungseinheiten angefordert hat,
- in einem Leistungsbestimmungsschritt ein bzw. der Austauschleistungsverlauf in Abhängigkeit von der angeforderten Austauschenergie bestimmt wird, wobei der Austauschleistungsverlauf für den Steuerzeitraum einen Verlauf der Austauschleistung vorgibt,
- in einem Verlaufsbestimmungsschritt in Abhängigkeit von dem Austauschleistungsverlauf ein zeitlicher bzw. der zeitliche Gesamtladezustandsverlauf vorgegeben wird,
- in einem Intervallbestimmungsschritt Gesamtleistungsintervalle für Bereichspunkte des Gesamtladezustands bestimmt werden,
- in einem Prüfschritt überprüft wird, ob der in dem Leistungsbestimmungsschritt vorgegebene Austauschleistungsverlauf innerhalb der Gesamtleistungsintervalle bleibt, die in dem Intervallbestimmungsschritt vorgegeben wurden, wobei insbesondere
- der Leistungsbestimmungsschritt unter Berücksichtigung der in dem Intervallbestimmungsschritt bestimmten Gesamtleistungsintervall wiederholt wird, wenn in dem Prüfschritt festgestellt wurde, dass der Austauschleistungsverlauf nicht innerhalb der Gesamtleistungsintervalle geblieben ist, und
- der Verlaufsbestimmungsschritt, der Intervallbestimmungsschritt und der Prüfschritt so oft widerholt werden, bis in dem Prüfschritt festgestellt wurde, dass der vorgegebene Austauschleistungsverlauf innerhalb der Gesamtleistungsintervalle bleibt, oder wobei
- der Verlaufsbestimmungsschritt, der Intervallbestimmungsschritt und der Prüfschritt in einen geschlossenen Vorgabealgorithmus ohne Iteration überführt werden, und das Vorgeben des Austauschleistungsverlaufs unter Berücksichtigung der Gesamtleistungsintervalle mittels des Vorgabealgorithmus erfolgt.

8. Verfahren nach einem der vorstehenden Ansprüche, **dadurch gekennzeichnet, dass**
- eine bzw. die Leistungsverteilvorschrift, die vorgibt, wie eine Gesamtaustauschleistung auf die einzelnen Leistungseinheiten aufgeteilt wird, das Aufteilen der Gesamtaustauchleistung auf die einzelnen Leistungseinheiten so vorgibt, dass Einzelladezustände sich einem mittleren Ladezustand aller Leistungseinheiten, die an die Ladeinfrastruktur angeschlossen sind, annähern und/oder
- dass sich eine Standardabweichung der Einzelladezustände verringert.

9. Verfahren nach einem der vorstehenden Ansprüche, **dadurch gekennzeichnet, dass**
- Gesamtleistungsintervalle in Abhängigkeit von während dem Steuerzeitraum ankommenden oder abfahrenden Elektrofahrzeugen bestimmt oder verändert werden.

10. Verfahren nach einem der vorstehenden Ansprüche, **dadurch gekennzeichnet, dass**
- eine bzw. die Leistungsverteilvorschrift, die vorgibt, wie eine Gesamtaustauschleistung auf die einzelnen Leistungseinheiten aufgeteilt wird, das Aufteilen der Gesamtaustauchleistung auf die einzelnen Leistungseinheiten so vorgibt, dass
- eine positive Teilaustauschleistung, mit der jeweils eine Leistungseinheit geladen wird, in Abhängigkeit von einer Differenz des Einzelladezustands von einem zu erreichenden Ladezustand, insbesondere vollgeladenem Ladezustand bestimmt wird, und
- eine negative Teilaustauschleistung, mit der die Leistungseinheit entladen wird, in Abhängigkeit von einer Differenz des Einzelladezustands von einem entladenen Ladezustand, bestimmt wird, und/oder
- bei Vorgabe einer positiven Austauschleistung, bei der Leistung aus dem elektrischen Versorgungsnetz zum Laden der Leistungseinheiten entnommen wird, Leistungseinheiten, die einen Ladezustand unterhalb eines bzw. des relativen mittleren Ladezustands aufweisen, vorrangig und/oder stärker geladen werden, als Leistungseinheiten, die einen Ladezustand oberhalb des relativen mittleren Ladezustands aufweisen, und
- bei Vorgabe einer negativen Austauschleistung, bei der Leistung in das elektrische Versorgungsnetz zum Entladen der Leistungseinheiten eingespeist wird, Leistungseinheiten, die einen Ladezustand oberhalb des relativen mittleren Ladezustands aufweisen, vorrangig und/oder stärker entladen werden, als Leistungseinheiten, die einen Ladezustand unterhalb des relativen mittleren Ladezustands aufweisen.

11. Verfahren nach einem der vorstehenden Ansprüche, **dadurch gekennzeichnet, dass**
- für einen bzw. den zeitlichen Gesamtladezustandsverlauf überprüft wird,
- ob ein am Ende des Steuerzeitraumes als zu erreichender Gesamtladezustand vorgegebener Gesamtzielladezustand erreicht werden kann und/oder
- ob für am Ende des Steuerzeitraumes als zu erreichende Einzelladezustände vorgegebene Einzelzielladezustände erreicht werden können, wobei insbesondere
- zu einem oder mehreren Prüfzeitpunkten in dem Steuerzeitraum die jeweilige Überprüfung durchgeführt wird, und/oder
- wenn erkannt wurde, dass der Gesamtzielladezustand bzw. wenigstens ein Einzelzielladezustand nicht erreicht werden kann,
- der Gesamtleistungsverlauf verändert wird,
- ein bzw. der Austauschleistungsverlauf verändert wird, und/oder
- eine bzw. die Leistungsverteilvorschrift angepasst wird.

12. Verfahren nach einem der vorstehenden Ansprüche, **dadurch gekennzeichnet, dass**
- für einen Steuerzeitraum und
- zu einem Planungszeitpunkt, der vor dem Steuerzeitraum liegt, insbesondere wenigstens einen Tag vor dem Steuerzeitraum liegt,
- der Flexibilitätsbereich mit dem Gesamtleistungsraum und/oder ein bzw. der Vorgabebereich mit seinem Vorgabeleistungsraum zur Planung eines Austauschleistungsverlaufs von der Ladeinfrastruktur bestimmt und an eine externe Einheit, insbesondere an einen Leistungsanbieter übertragen wird,
- in der externen Einheit ein Austauschleistungsverlauf in Abhängigkeit von dem Flexibilitätsbereich und/oder dem Vorgabebereich für den Steuerzeitraum vorgegeben wird, und
- in dem Steuerzeitraum ein Leistungsaustausch zwischen der Ladeinfrastruktur und dem elektrischen Versorgungsnetz gemäß dem vorgegebenen Austauschleistungsverlauf durchgeführt wird.

13. Ladeinfrastruktur mit einer Steuereinrichtung mit wenigsten einer Schnittstelle zum Informationsaustausch, **dadurch gekennzeichnet, dass** die Ladeinfrastruktur, insbesondere die Steuereinrichtung dazu vorbereitet ist, ein Verfahren gemäß einem der vorstehenden Ansprüche auszuführen.
